# EUROPEAN PATENT APPLICATION

(11) **EP 4 442 361 A1**
(43) Date of publication of application: **09.10.2024**
(21) Application number: 22901059.0
(22) Date of filing: 14.11.2022
(51) Int. Cl.: B01J 23/46, B01J 23/89, B01J 35/10, C01B 3/32

(54) **HYDROGEN PRODUCTION CATALYST AND HYDROGEN PRODUCTION METHOD**

(30) Priority: 01.12.2021 JP 2021195747
(71) Applicant: Nisshinbo Holdings Inc., Tokyo 103-8650 (JP); Japan Radio Co., Ltd., Mitaka-shi, Tokyo 181-0002 (JP)
(72) Inventor: MATSUZAWA, Erika, Chiba-shi, Chiba 267-0056 (JP); KUBOTA, Yuji, Chiba-shi, Chiba 267-0056 (JP)
(74) Representative: Vossius & Partner Patentanwälte Rechtsanwälte mbB
(86) International application number: PCT/JP2022/042192
(87) International publication number: WO 2023/100626

(57) **Abstract**

Provided are a catalyst for hydrogen production that achieves both excellent catalytic activity and excellent durability, and a method of producing hydrogen using the catalyst. The catalyst for hydrogen production is a catalyst for hydrogen production including: a carbon carrier; and catalyst metal particles supported on the carbon carrier, wherein the catalyst metal particles each contain a noble metal, wherein the catalyst for hydrogen production has a ratio of a BJH mesopore volume to a BJH micropore volume of 0.30 or more and 7.80 or less obtained by a nitrogen adsorption method, and wherein the catalyst for hydrogen production has a ratio of a total of a BJH micropore area and a BJH mesopore area to a BJH macropore area of 30 or more and 3,500 or less obtained by the nitrogen adsorption method.

## Description

### Technical Field

The present invention relates to a catalyst for hydrogen production and a method of producing hydrogen.

### Background Art

In Patent Literature 1, there is a description of a method of reforming oxygenated hydrocarbons, including the step of bringing a feedstock solution, containing water and at least 20 weight percent of the total feedstock solution of an oxygenated hydrocarbon, into contact with a reforming catalyst under conditions of reaction temperature and reaction pressure effective to produce hydrogen gas, wherein the oxygenated hydrocarbon has at least one oxygen atom and wherein the reforming catalyst contains a Group VIIB transition metal and a Group VIII transition metal.

In Patent Literature 2, there is a description of a carbon catalyst for hydrogen production, which is obtained by carbonizing a raw material including an organic substance and a transition metal, the catalyst being used for hydrogen production by thermal decomposition of a hydrocarbon compound and/or an oxygen-containing organic compound.

In Patent Literature 3, there is a description of a carbon catalyst, containing iron, exhibiting a weight reduction ratio in the temperature range from 200°C to 1,200°C of 12.0 wt% or less measured by thermogravimetric analysis in a nitrogen atmosphere, and having a carbon structure that exhibits, in X-ray absorption fine structure analysis of a K absorption edge of the iron, the following (a) and/or (b): (a) a ratio of a normalized absorbance at 7,130 eV to a normalized absorbance at 7,110 eV is 7.0 or more; and (b) a ratio of a normalized absorbance at 7,135 eV to a normalized absorbance at 7,110 eV is 7.0 or more.

### Citation List

### Patent Literature

[PTL 1] JP 2009-521387 A
[PTL 2] JP 2012-115725 A
[PTL 3] WO 2019/013051 A1

### Summary of Invention

### Technical Problem

However, it has hitherto been difficult for a catalyst for hydrogen production to achieve both catalytic activity and durability.

The present invention has been made in view of the above-mentioned problem, and one of the objects of the present invention is to provide a catalyst for hydrogen production that achieves both excellent catalytic activity and excellent durability, and a method of producing hydrogen.

### Solution to Problem

To solve the above-mentioned problem, according to one embodiment of the present invention, there is provided a catalyst for hydrogen production including: a carbon carrier; and catalyst metal particles supported on the carbon carrier, wherein the catalyst metal particles contain a noble metal, wherein the catalyst for hydrogen production has a ratio of a BJH mesopore volume to a BJH micropore volume of 0.30 or more and 7.80 or less obtained by a nitrogen adsorption method, and wherein the catalyst for hydrogen production has a ratio of a total of a BJH micropore area and a BJH mesopore area to a BJH macropore area of 30 or more and 3,500 or less obtained by the nitrogen adsorption method. According to the present invention, there is provided a catalyst for hydrogen production that achieves both excellent catalytic activity and excellent durability.

The catalyst may have a ratio of the BJH micropore area to the BJH macropore area of 10 or more obtained by the nitrogen adsorption method. The catalyst may have a ratio of the BJH mesopore area to the BJH macropore area of 10 or more obtained by the nitrogen adsorption method. The catalyst may have a ratio of the BJH micropore area to the BJH mesopore area of 0.1 or more obtained by the nitrogen adsorption method. The catalyst may have a ratio of the BJH micropore area to the BJH mesopore area of 15.0 or less obtained by the nitrogen adsorption method.

The catalyst may have a ratio of a BET specific surface area to the BJH micropore area of 2.5 or less obtained by the nitrogen adsorption method. The catalyst may have a ratio of a BET specific surface area to the BJH mesopore area of 1.0 or more obtained by the nitrogen adsorption method. The catalyst may have a ratio of a BET specific surface area to the BJH mesopore area of 10.0 or less obtained by the nitrogen adsorption method. The catalyst may have a ratio of a BET specific surface area to the BJH macropore area of 20 or more obtained by the nitrogen adsorption method.

The catalyst may have a ratio of a nitrogen content (atom%) to a carbon content (atom%) of 0.1 or more obtained by X-ray photoelectron spectroscopy. The catalyst may have a ratio of an intensity of a D band having a peak top in a vicinity of 1,350 cm⁻¹ to an intensity of a G band having a peak top in a vicinity of 1,600 cm⁻¹ of 1.15 or less in a Raman spectrum obtained by Raman spectroscopy. The catalyst may have a weight ratio of a content of the noble metal obtained by X-ray photoelectron spectroscopy to a content of the noble metal obtained by inductively coupled plasma mass spectrometry of 0.70 or less. The catalyst metal particles may further contain a non-noble metal.

To solve the above-mentioned problem, according to one embodiment of the present invention, there is provided a method of producing hydrogen including producing hydrogen using the catalyst of any one of the above-mentioned embodiments. According to the present invention, there is provided an effective method of producing hydrogen.

### Advantageous Effects of Invention

According to the present invention, a catalyst for hydrogen production that achieves both excellent catalytic activity and excellent durability, and a method of producing hydrogen, are provided.

### Brief Description of Drawings

FIG. 1 is an explanatory view showing an example of evaluation results of the characteristics of metal-supported catalysts in Examples according to embodiments of the present invention.
FIG. 2 is an explanatory view showing another example of evaluation results of the characteristics of the metal-supported catalysts in Examples according to the embodiments of the present invention.

### Description of Embodiments

An embodiment of the present invention will be described below. The present invention is not limited to examples described in the embodiment.

A catalyst for hydrogen production according to an embodiment of the present invention (hereinafter referred to as "catalyst of the present invention") is a metal-supported catalyst including a carbon carrier and catalyst metal particles supported on the carbon carrier. The catalyst of the present invention is preferably formed mainly of the carbon carrier and the catalyst metal particles. A ratio of the total of the weight of the carbon carrier included in the catalyst of the present invention and the weight of the catalyst metal particles included therein to the weight of the catalyst of the present invention may be, for example, 90 wt% or more (90 wt% or more and 100 wt% or less), and is preferably 95 wt% or more, particularly preferably 98 wt% or more. The ratio of the total of the weight of the carbon carrier included in the catalyst of the present invention and the weight of the catalyst metal particles included therein to the weight of the catalyst of the present invention is obtained by thermogravimetric analysis (TG).

The carbon carrier included in the catalyst of the present invention is a carbon material formed mainly of carbon. A carbon content of the carbon carrier may be, for example, 70 wt% or more (70 wt% or more and 100 wt% or less), and is preferably 75 wt% or more, more preferably 80 wt% or more, particularly preferably 85 wt% or more. The carbon content of the carbon carrier is obtained by elemental analysis (combustion method) of the carbon carrier.

The carbon carrier is a porous carbon material. The carbon carrier preferably has pores having interconnectivity. The carbon carrier is preferably a carbonized material. The carbonized material is obtained by carbonizing a raw material containing an organic substance. The content of the organic substance in the raw material for carbonization may be, for example, 5 wt% or more, and is preferably 10 wt% or more. The content of the organic substance in the raw material for carbonization may be, for example, 90 wt% or less, and is preferably 80 wt% or less. The content of the organic substance in the raw material for carbonization may be specified by combining any one of the above-mentioned lower limit values and any one of the above-mentioned upper limit values.

The organic substance contained in the raw material is not particularly limited as long as an effect of the present invention is obtained. An organic compound contained in the organic substance may be a polymer (e.g., a thermosetting resin and/or a thermoplastic resin) and/or an organic compound having a smaller molecular weight.

Specifically, the organic substance may be, for example, one or more selected from the group consisting of: polyacrylonitrile; a polyacrylonitrile-polyacrylic acid copolymer; a polyacrylonitrile-polymethyl acrylate copolymer; a polyacrylonitrile-polymethacrylic acid copolymer; a polyacrylonitrile-polymethacrylic acid-polymethallylsulfonic acid copolymer; a polyacrylonitrile-polymethyl methacrylate copolymer; a phenol resin; polyfurfuryl alcohol; furan; a furan resin; a phenol formaldehyde resin; melamine; a melamine resin; an epoxy resin; a nitrogen-containing chelate resin (e.g., one or more selected from the group consisting of: a polyamine-type chelate resin; an iminodiacetic acid-type chelate resin; an aminophosphoric acid-type chelate resin; and an aminomethylphosphonic acid-type chelate resin); a polyamideimide resin; pyrrole; polypyrrole; polyvinylpyrrole; poly(3-methylpyrrole); acrylonitrile; polyvinylidene chloride; thiophene; oxazole; thiazole; pyrazole; vinylpyridine; polyvinylpyridine; pyridazine; pyrimidine; piperazine; pyran; morpholine; imidazole; 1-methylimidazole; 2-methylimidazole; quinoxaline; aniline; polyaniline; succinic acid dihydrazide; adipic acid dihydrazide; polysulfone; polyaminobismaleimide; polyimide; polyvinyl alcohol; polyvinyl butyral; benzimidazole; polybenzimidazole; polyamide; polyester; polylactic acid; polyether; polyether ether ketone; cellulose; carboxymethyl cellulose; lignin; chitin; chitosan; pitch; silk; wool; polyamino acid; a nucleic acid; DNA; RNA; hydrazine; hydrazide; urea; salen; polycarbazole; polybismaleimide; triazine; polyacrylic acid; a polyacrylic acid ester; a polymethacrylic acid ester; polymethacrylic acid; polyurethane; polyamidoamine; and polycarbodiimide.

The carbon carrier preferably contains nitrogen. That is, in this case, the carbon carrier contains a nitrogen atom in its carbon structure. The carbon carrier containing nitrogen is preferably a carbonized material containing nitrogen. The nitrogen-containing carbonized material is preferably obtained by carbonizing a raw material containing a nitrogen-containing organic substance. The nitrogen-containing organic substance preferably contains a nitrogen-containing organic compound. The nitrogen-containing organic compound is not particularly limited as long as the organic compound contains a nitrogen atom in its molecule. In addition, nitrogen contained in the carbon carrier may also be introduced through nitrogen doping treatment. That is, the nitrogen-containing carbon carrier is preferably a carbon carrier (preferably, a carbonized material) having been subjected to nitrogen doping treatment.

A nitrogen content of the carbon carrier may be, for example, 0.10 wt% or more, and is preferably 0.15 wt% or more, more preferably 0.20 wt% or more, still more preferably 0.25 wt% or more, particularly preferably 0.30 wt% or more. The nitrogen content of the carbon carrier may be, for example, 10.00 wt% or less. The nitrogen content of the carbon carrier is obtained by elemental analysis (combustion method) of the carbon carrier.

The carbonization in the production of the carbonized material is performed by heating the raw material, and holding the raw material at a temperature at which the organic substance contained in the raw material is carbonized (hereinafter referred to as "carbonization temperature"). The carbonization temperature is not particularly limited as long as an effect of the present invention is obtained. The carbonization temperature may be, for example, 300°C or more, and is preferably 700°C or more, more preferably 900°C or more, particularly preferably 1,000°C or more.

Further, as a carbonization temperature of 1,000°C or more, the carbonization temperature is preferably 1,100°C or more, more preferably 1,200°C or more, particularly preferably 1,300°C or more. The carbonization temperature may be, for example, 3,000°C or less. A temperature increase rate up to the carbonization temperature is not particularly limited as long as an effect of the present invention is obtained, and the temperature increase rate may be, for example, 0.5°C/min or more and 300°C/min or less. The carbonization is preferably performed in an inert atmosphere such as a nitrogen atmosphere.

The carbonization may be performed under normal pressure (atmospheric pressure), but is preferably performed under pressure (under a pressure higher than the atmospheric pressure). When the carbonization is performed under pressure, the pressure of an atmosphere in which the carbonization is performed may be, in terms of a gauge pressure, for example, 0.05 MPa or more, and is preferably 0.15 MPa or more, more preferably 0.20 MPa or more, still more preferably 0.40 MPa or more, particularly preferably 0.50 MPa or more. The pressure of the atmosphere in which the carbonization is performed may be, for example, 10.00 MPa or less.

The carbon carrier preferably contains a metal. In this case, the carbon carrier is preferably a carbonized material containing a metal. The metal contained in the carbonized material is preferably a metal derived from the raw material for carbonization (hereinafter sometimes referred to as "raw material metal"). A carbonized material containing the raw material metal is obtained by carbonizing a raw material containing an organic substance and the metal.

The carbon carrier containing a metal may be a carbonized material having been subjected to metal removal treatment after the carbonization. The metal removal treatment is treatment in which the content of the metal (raw material metal) in the carbonized material is reduced. Specifically, the metal removal treatment is preferably, for example, washing treatment with an acid and/or electrolysis treatment.

When the carbon carrier contains a metal, the carbon carrier is preferably a carbonized material containing the metal (raw material metal) inside its skeleton. That is, in this case, the carbon carrier is produced by carbonizing a raw material obtained by mixing an organic substance and the metal, and hence the carbon carrier contains the metal (raw material metal) inside a skeleton forming its porous structure.

Even when the carbon carrier is a carbonized material produced through the metal removal treatment, the raw material metal remains inside the skeleton of the carbon carrier because it is generally difficult to completely remove the raw material metal contained inside the skeleton of the carbon carrier.

The metal inside the skeleton of the carbon carrier is detected, for example, by subjecting the skeleton to surface etching treatment and analyzing a cross section exposed through the etching treatment. That is, when one particle of the carbon carrier is subjected to etching treatment, the metal is detected on a cross section of the particle exposed through the etching treatment. The metal contained in the carbon carrier may be detected, for example, by inductively coupled plasma mass spectrometry (ICP-MS) of the carbon carrier.

In the carbon carrier on which the catalyst metal particles have not yet been supported (e.g., the carbon carrier that has not yet been subjected to catalyst metal supporting treatment), among metals contained in the carbon carrier, the content of a metal inside the skeleton of the carbon carrier may be set to be larger than the content of a metal at the surface of the skeleton of the carbon carrier.

The carbon carrier is preferably a carbon material exhibiting catalytic activity. That is, the carbon carrier is preferably a carbon catalyst that itself exhibits catalytic activity. The carbon catalyst is preferably a carbonized material containing a metal, which is preferably obtained by carbonizing a raw material containing an organic substance and the metal as described above.

The catalytic activity exhibited by the carbon catalyst is, for example, preferably reduction activity and/or oxidation activity, more preferably oxygen reduction activity and/or hydrogen dissociation activity, particularly preferably at least hydrogen dissociation activity.

It is conceived that the catalytic activity exhibited by the carbon catalyst obtained by carbonizing a raw material containing an organic substance and a metal is mainly attributed to active sites of a specific carbon structure formed through the carbonization. This is backed up, for example, by the following fact: even when a carbonized material obtained through carbonization is subjected to metal removal treatment in which the content of a raw material metal is reduced, the catalytic activity of the carbonized material after the metal removal treatment is not greatly reduced compared to that before the metal removal treatment.

The raw material metal is preferably a transition metal. Specifically, the raw material metal may be a transition metal belonging to Groups III to XII in the periodic table, and is preferably a transition metal belonging to the fourth period of Groups III to XII in the periodic table.

More specifically, the raw material metal may be, for example, one or more selected from the group consisting of: scandium (Sc); titanium (Ti); vanadium (V); chromium (Cr); manganese (Mn); iron (Fe); cobalt (Co); nickel (Ni); copper (Cu); zinc (Zn); yttrium (Y); zirconium (Zr); niobium (Nb); molybdenum (Mo); ruthenium (Ru); rhodium (Rh); palladium (Pd); silver (Ag); lanthanoids (e.g., gadolinium (Gd)); and actinoids.

The raw material metal may be a transition metal except for platinum (Pt). The raw material metal may be a transition metal except for ruthenium (Ru), palladium (Pd), and Pt. The raw material metal may be a transition metal except for noble metals (Ru, Pd, rhodium (Rh), silver (Ag), osmium (Os), iridium (Ir), Pt, and gold (Au)).

The raw material metal is, for example, preferably one or more selected from the group consisting of: Fe; Co; Ni; Cu; and Zn, more preferably one or more selected from the group consisting of: Fe; Co; Ni; and Zn, particularly preferably one or more selected from the group consisting of: Fe; and Zn.

The carbon carrier is preferably particulate. In this case, the particle diameter of the carbon carrier is not particularly limited, but the median diameter of the carbon carrier may be, for example, 1.00 um or less, and is preferably 0.80 µm or less, more preferably 0.55 um or less, still more preferably 0.50 um or less, particularly preferably 0.45 µm or less. The median diameter of the carbon carrier may be, for example, 0.05 µm or more. The particle diameter of the carbon carrier is obtained by laser diffractometry of the carbon carrier.

The catalyst metal particles included in the catalyst of the present invention (i.e., the catalyst metal particles supported on the carbon carrier in the catalyst of the present invention) contain a noble metal. The noble metal contained in the catalyst metal particles is not particularly limited as long as an effect of the present invention is obtained, and may be one or more selected from the group consisting of: Ru; Pd; Rh; Ag; Os; Ir; Pt; and Au, and is preferably one or more selected from the group consisting of: Ru; Pd; Rh; Ir; and Pt, more preferably one or more selected from the group consisting of: Ru; Pd; and Pt, particularly preferably one or more selected from the group consisting of: Ru; and Pd.

When the catalyst metal particles contain one or more selected from the group consisting of: Ru; Pd; and Pt, the catalyst metal particles may be free of noble metals except for Ru, Pd, and Pt (Rh, Ag, Os, Ir, and Au). In this case, it is appropriate for the catalyst of the present invention to contain one or more selected from the group consisting of: Ru; Pd; and Pt, and be free of noble metals except for Ru, Pd, and Pt (Rh, Ag, Os, Ir, and Au).

When the catalyst metal particles contain one or more selected from the group consisting of: Ru; and Pd, the catalyst metal particles may be free of Pt, or may be free of noble metals except for Ru and Pd (Rh, Ag, Os, Ir, Pt, and Au). In this case, it is appropriate for the catalyst of the present invention to contain one or more selected from the group consisting of: Ru; and Pd, and be free of Pt or free of noble metals except for Ru and Pd (Rh, Ag, Os, Ir, Pt, and Au).

The catalyst metal particles may contain only a noble metal. That is, the catalyst metal particles may be noble metal particles each formed only of a noble metal. The noble metal particles may each be formed of one noble metal, or may each be formed of a plurality of noble metals.

Specifically, the noble metal particles formed of one kind of noble metal may each be formed of only one selected from the group consisting of: Ru; Pd; Rh; Ag; Os; Ir; Pt; and Au, and are each formed of preferably only one selected from the group consisting of: Ru; Pd; Rh; Ir; and Pt, more preferably only one selected from the group consisting of: Ru; Pd; and Pt, particularly preferably only one selected from the group consisting of: Ru; and Pd.

The noble metal particles formed of a plurality of noble metals may each be formed of two or more selected from the group consisting of: Ru; Pd; Rh; Ag; Os; Ir; Pt; and Au, and are each formed of preferably two or more selected from the group consisting of: Ru; Pd; Rh; Ir; and Pt, more preferably two or more selected from the group consisting of: Ru; Pd; and Pt, particularly preferably Ru and Pd.

The catalyst metal particles preferably further contain a non-noble metal (a metal which is not a noble metal, that is, a metal other than a noble metal). The catalyst of the present invention can achieve both catalytic activity and durability more effectively in the case where the catalyst metal particles contain a non-noble metal in addition to a noble metal than in the case where the catalyst metal particles contain only a noble metal.

That is, when the catalyst metal particles contain a non-noble metal, particularly the durability is effectively improved. Specifically, when the catalyst metal particles contain a non-noble metal in addition to a noble metal, self-diffusion of the noble metal is suppressed during heating and/or a chemical reaction by virtue of the presence of the non-noble metal, and thus aggregation of the noble metal is effectively suppressed.

The non-noble metal contained in the catalyst metal particles is not particularly limited as long as an effect of the present invention is obtained, but the non-noble metal may be, for example, a transition metal other than noble metals, and is preferably a transition metal belonging to Groups III to XII in the periodic table except for noble metals, particularly preferably a transition metal belonging to the fourth period of Groups III to XII in the periodic table.

Specifically, the non-noble metal contained in the catalyst metal particles is, for example, preferably one or more kinds selected from the group consisting of: Ti; Mn; Fe; Co; Ni; Cu; Zn; and Nb, particularly preferably one or more kinds selected from the group consisting of: Fe; Co; Ni; Cu; and Zn.

When the catalyst metal particles contain one or more kinds selected from the group consisting of: Fe; Co; Ni; Cu; and Zn, the catalyst metal particles may be free of any non-noble metal except for Fe, Co, Ni, Cu, and Zn. In this case, it is appropriate that the catalyst of the present invention contain one or more kinds selected from the group consisting of: Fe; Co; Ni; Cu; and Zn, and be free of any non-noble metal except for Fe, Co, Ni, Cu, and Zn.

The catalyst metal particles may contain the same non-noble metal (e.g., a transition metal other than noble metals) as the raw material metal contained in the carbon carrier (e.g., a metal inside the skeleton of the carbon carrier), or may be free of the same non-noble metal as the raw material metal.

When the catalyst metal particles contain a noble metal and a non-noble metal, the catalyst metal particles may contain one or more selected from the group consisting of: an alloy of the noble metal and the non-noble metal (noble metal/non-noble metal alloy); the noble metal which is not forming an alloy with the non-noble metal; and the non-noble metal which is not forming an alloy with the noble metal.

The catalyst metal particles may contain one or more selected from the group consisting of: noble metal/non-noble metal alloy particles each formed of an alloy of a noble metal and a non-noble metal; noble metal particles each formed only of a noble metal which is not forming an alloy with a non-noble metal; and non-noble metal particles each formed only of a non-noble metal which is not forming an alloy with a noble metal.

When the catalyst metal particles contain the noble metal/non-noble metal alloy particles, the catalyst metal particles may further contain the noble metal particles and/or may further contain the non-noble metal particles. When the catalyst metal particles contain the noble metal/non-noble metal alloy particles, the catalyst metal particles may be free of the noble metal particles and/or may be free of the non-noble metal particles. When the catalyst metal particles contain the noble metal particles, the catalyst metal particles may be free of the noble metal/non-noble metal alloy particles.

The content of the noble metal (the total content of one or more noble metals) obtained by ICP-MS (ICP noble metal content) of the catalyst of the present invention is not particularly limited as long as an effect of the present invention is obtained, but the content may be, for example, 0.500 wt% or more, and is preferably 1.500 wt% or more, more preferably 2.000 wt% or more, still more preferably 3.000 wt% or more, particularly preferably 4.000 wt% or more.

The ICP noble metal content of the catalyst of the present invention may be, for example, 40.000 wt% or less, and is preferably 30.000 wt% or less, more preferably 25.000 wt% or less, still more preferably 20.000 wt% or less, particularly preferably 15.000 wt% or less. Further, the ICP noble metal content of the catalyst of the present invention may be, for example, 12.000 wt% or less, and is preferably 10.000 wt% or less, more preferably 9.000 wt% or less, still more preferably 8.000 wt% or less, particularly preferably 7.000 wt% or less. The ICP noble metal content of the catalyst of the present invention may be specified by combining any one of the above-mentioned lower limit values and any one of the above-mentioned upper limit values.

When the catalyst of the present invention contains one or more selected from the group consisting of: Ru; and Pd as a noble metal, a weight ratio of the content of Pt obtained by ICP-MS to the ICP noble metal content of the catalyst of the present invention is not particularly limited as long as an effect of the present invention is obtained, but the weight ratio may be, for example, 0.50 or less (0.00 or more and 0.50 or less), may be 0.10 or less, may be 0.05 or less, or may be 0.01 or less.

When the catalyst of the present invention contains one or more selected from the group consisting of: Ru; and Pd as a noble metal, the content of Pt obtained by ICP-MS of the catalyst of the present invention is not particularly limited as long as an effect of the present invention is obtained, but the content may be, for example, 0.100 wt% or less (0.000 wt% or more and 0.100 wt% or less), or may be 0.010 wt% or less.

When the catalyst of the present invention contains one or more selected from the group consisting of: Ru; and Pd as a noble metal, a weight ratio of the content of noble metals other than Ru and Pd obtained by ICP-MS to the ICP noble metal content of the catalyst of the present invention is not particularly limited as long as an effect of the present invention is obtained, but the weight ratio may be, for example, 0.50 or less (0.00 or more and 0.50 or less), may be 0.10 or less, may be 0.05 or less, or may be 0.01 or less.

When the catalyst of the present invention contains one or more selected from the group consisting of: Ru; and Pd as a noble metal, the content of noble metals other than Ru and Pd obtained by ICP-MS of the catalyst of the present invention (when there are a plurality of the noble metals, the total content of the plurality of the noble metals) is not particularly limited as long as an effect of the present invention is obtained, but the content may be, for example, 0.100 wt% or less (0.000 wt% or more and 0.100 wt% or less), or may be 0.010 wt% or less.

The content of the non-noble metal (the total content of one or more non-noble metals) obtained by ICP-MS (ICP non-noble metal content) of the catalyst of the present invention (when the carbon carrier contains a raw material metal which is a non-noble metal, the total of the content of the raw material metal and the content of the non-noble metal in the catalyst metal particles) is not particularly limited as long as an effect of the present invention is obtained, but the content may be, for example, 0.001 wt% or more, and is preferably 0.010 wt% or more, more preferably 0.050 wt% or more, still more preferably 0.100 wt% or more, particularly preferably 0.150 wt% or more. Further, the ICP non-noble metal content of the catalyst of the present invention may be, for example, 0.500 wt% or more, and is preferably 2.000 wt% or more, more preferably 5.000 wt% or more, still more preferably 8.000 wt% or more, particularly preferably 10.000 wt% or more.

The ICP non-noble metal content of the catalyst of the present invention may be, for example, 40.000 wt% or less, and is preferably 35.000 wt% or less, more preferably 30.000 wt% or less, still more preferably 25.000 wt% or less, particularly preferably 21.000 wt% or less. The ICP non-noble metal content of the catalyst of the present invention may be specified by combining any one of the above-mentioned lower limit values and any one of the above-mentioned upper limit values.

The content of the raw material metal (the total content of one or more raw material metals) obtained by ICP-MS (ICP raw material metal content) of the catalyst of the present invention is not particularly limited as long as an effect of the present invention is obtained, but the content may be, for example, 0.001 wt% or more, may be 0.005 wt% or more, may be 0.010 wt% or more, may be 0.020 wt% or more, may be 0.030 wt% or more, may be 0.040 wt% or more, or may be 0.050 wt% or more.

The ICP raw material metal content of the catalyst of the present invention may be, for example, 20.000 wt% or less, and is preferably 10.000 wt% or less, more preferably 6.000 wt% or less, still more preferably 0.800 wt% or less, particularly preferably 0.600 wt% or less. The ICP raw material metal content of the catalyst of the present invention may be specified by combining any one of the above-mentioned lower limit values and any one of the above-mentioned upper limit values.

The content of Fe obtained by ICP-MS (ICP-Fe content) of the catalyst of the present invention (when the carbon carrier contains Fe as a raw material metal, the total of the content of Fe as the raw material metal and the content of Fe as the catalyst metal particles) is not particularly limited as long as an effect of the present invention is obtained, but the content may be, for example, 0.001 wt% or more, may be 0.005 wt% or more, may be 0.010 wt% or more, may be 0.020 wt% or more, may be 0.030 wt% or more, may be 0.040 wt% or more, or may be 0.050 wt% or more.

The ICP-Fe content of the catalyst of the present invention may be, for example, 20.000 wt% or less, and is preferably 10.000 wt% or less, more preferably 6.000 wt% or less, still more preferably 3.000 wt% or less, particularly preferably 1.000 wt% or less. Further, the ICP-Fe content of the catalyst of the present invention may be, for example, 0.800 wt% or less, and is preferably 0.500 wt% or less, more preferably 0.400 wt% or less, still more preferably 0.300 wt% or less, particularly preferably 0.200 wt% or less. The ICP-Fe content of the catalyst of the present invention may be specified by combining any one of the above-mentioned lower limit values and any one of the above-mentioned upper limit values.

A weight ratio of the ICP non-noble metal content to the ICP noble metal content (ICP non-noble metal/noble metal weight ratio) of the catalyst of the present invention (a ratio calculated by dividing the content (wt%) of the non-noble metal in the catalyst of the present invention (when two or more non-noble metals are contained, the total content (wt%) of the two or more non-noble metals) by the content (wt%) of the noble metal in the catalyst of the present invention (when two or more noble metals are contained, the total content (wt%) of the two or more noble metals)) is not particularly limited as long as an effect of the present invention is obtained, but the weight ratio may be, for example, 0.010 or more, may be 0.050 or more, or may be 0.100 or more, and is preferably 0.300 or more, more preferably 0.500 or more, still more preferably 0.700 or more, particularly preferably 0.900 or more. Further, the ICP non-noble metal/noble metal weight ratio of the catalyst of the present invention may be, for example, 1.000 or more, and is preferably 1.500 or more, more preferably 2.000 or more, still more preferably 2.500 or more, particularly preferably 3.000 or more.

The ICP non-noble metal/noble metal weight ratio of the catalyst of the present invention may be, for example, 40.000 or less, and is preferably 20.000 or less, more preferably 15.000 or less, particularly preferably 10.000 or less. Further, the ICP non-noble metal/noble metal weight ratio of the catalyst of the present invention may be, for example, 8.000 or less, and is preferably 7.000 or less, more preferably 6.000 or less, still more preferably 5.000 or less, particularly preferably 4.000 or less. The ICP non-noble metal/noble metal weight ratio of the catalyst of the present invention may be specified by combining any one of the above-mentioned lower limit values and any one of the above-mentioned upper limit values.

A weight ratio of the content of Fe to the content of the non-noble metal obtained by ICP-MS (ICP-Fe/non-noble metal weight ratio) of the catalyst of the present invention is not particularly limited as long as an effect of the present invention is obtained, but the weight ratio may be, for example, 1.000 or less, and is preferably 0.800 or less, more preferably 0.500 or less, still more preferably 0.400 or less, particularly preferably 0.300 or less. Further, the ICP-Fe/non-noble metal weight ratio of the catalyst of the present invention may be, for example, 0.250 or less, and is preferably 0.100 or less, more preferably 0.035 or less, still more preferably 0.020 or less, particularly preferably 0.010 or less. The ICP-Fe/non-noble metal weight ratio of the catalyst of the present invention may be, for example, 0.001 or more, and is preferably 0.002 or more, more preferably 0.003 or more, particularly preferably 0.004 or more. The ICP-Fe/non-noble metal weight ratio of the catalyst of the present invention may be specified by combining any one of the above-mentioned lower limit values and any one of the above-mentioned upper limit values.

The content of the noble metal obtained by XPS (XPS noble metal content) of the catalyst of the present invention is not particularly limited as long as an effect of the present invention is obtained, but the content may be, for example, 0.10 wt% or more, and is preferably 0.15 wt% or more, more preferably 0.20 wt% or more, still more preferably 0.25 wt% or more, particularly preferably 0.30 wt% or more.

The XPS noble metal content of the catalyst of the present invention may be, for example, 40.00 wt% or less, and is preferably 25.00 wt% or less, more preferably 12.00 wt% or less, still more preferably 5.00 wt% or less, particularly preferably 2.50 wt% or less. Further, the XPS noble metal content of the catalyst of the present invention is, for example, preferably 2.00 wt% or less, more preferably 1.50 wt% or less, particularly preferably 1.00 wt% or less. The XPS noble metal content of the catalyst of the present invention may be specified by combining any one of the above-mentioned lower limit values and any one of the above-mentioned upper limit values.

The content of the non-noble metal obtained by XPS (XPS non-noble metal content) of the catalyst of the present invention is not particularly limited as long as an effect of the present invention is obtained, but the content may be, for example, 0.10 wt% or more, and is preferably 0.30 wt% or more, more preferably 0.50 wt% or more, particularly preferably 0.70 wt% or more. Further, the XPS non-noble metal content of the catalyst of the present invention is, for example, preferably 1.00 wt% or more, more preferably 1.50 wt% or more, particularly preferably 2.00 wt% or more.

The XPS non-noble metal content of the catalyst of the present invention may be, for example, 40.00 wt% or less, and is preferably 25.00 wt% or less, more preferably 10.00 wt% or less, still more preferably 6.50 wt% or less, particularly preferably 5.50 wt% or less. The XPS non-noble metal content of the catalyst of the present invention may be specified by combining any one of the above-mentioned lower limit values and any one of the above-mentioned upper limit values.

A weight ratio of the XPS non-noble metal content to the XPS noble metal content (XPS non-noble metal/noble metal weight ratio) of the catalyst of the present invention is not particularly limited as long as an effect of the present invention is obtained, but the weight ratio may be, for example, 0.10 or more, and is preferably 0.80 or more, more preferably 1.50 or more, still more preferably 3.00 or more, particularly preferably 3.50 or more.

The XPS non-noble metal/noble metal weight ratio of the catalyst of the present invention may be, for example, 30.00 or less, and is preferably 20.00 or less, more preferably 10.00 or less, still more preferably 8.00 or less, particularly preferably 7.50 or less. The XPS non-noble metal/noble metal weight ratio of the catalyst of the present invention may be specified by combining any one of the above-mentioned lower limit values and any one of the above-mentioned upper limit values.

A weight ratio of the XPS noble metal content to the ICP noble metal content (noble metal-XPS/ICP weight ratio) of the catalyst of the present invention (a ratio obtained by dividing the content (wt%) of the noble metal in the catalyst of the present invention obtained by XPS by the content (wt%) of the noble metal in the catalyst of the present invention obtained by ICP-MS) is not particularly limited as long as an effect of the present invention is obtained, but the weight ratio may be, for example, 0.70 or less, and is preferably 0.55 or less, more preferably 0.40 or less, still more preferably 0.30 or less, particularly preferably 0.20 or less.

The noble metal-XPS/ICP weight ratio of the catalyst of the present invention may be, for example, 0.01 or more, and is preferably 0.02 or more, more preferably 0.03 or more, still more preferably 0.04 or more, particularly preferably 0.05 or more. The noble metal-XPS/ICP weight ratio of the catalyst of the present invention may be specified by combining any one of the above-mentioned lower limit values and any one of the above-mentioned upper limit values.

The noble metal-XPS/ICP weight ratio of the catalyst of the present invention (e.g., when the noble metal is Ru, Ru-XPS/ICP weight ratio) corresponds to a ratio of the content of the noble metal in the surface of the catalyst of the present invention to the total content of the noble metal in the catalyst of the present invention. The noble metal in the surface of the catalyst of the present invention contributes to the catalytic activity of the catalyst of the present invention compared to the noble metal inside the catalyst of the present invention. On the other hand, the noble metal inside the catalyst of the present invention is less liable to aggregate compared to the noble metal in the surface of the catalyst of the present invention, and hence contributes to the durability of the catalyst of the present invention. Accordingly, a noble metal-XPS/ICP weight ratio of the catalyst of the present invention falling within the appropriate ranges contributes to effective achievement of both the catalytic activity and the durability of the catalyst of the present invention.

A weight ratio of the XPS non-noble metal content to the ICP non-noble metal content (non-noble metal-XPS/ICP weight ratio) of the catalyst of the present invention (a ratio obtained by dividing the content (wt%) of the non-noble metal in the catalyst of the present invention obtained by XPS by the content (wt%) of the non-noble metal in the catalyst of the present invention obtained by ICP-MS) is not particularly limited as long as an effect of the present invention is obtained, but the weight ratio may be, for example, 8.50 or less, and is preferably 0.70 or less, more preferably 0.50 or less, still more preferably 0.40 or less, particularly preferably 0.30 or less.

The non-noble metal-XPS/ICP weight ratio of the catalyst of the present invention may be, for example, 0.01 or more, and is preferably 0.05 or more, more preferably 0.07 or more, still more preferably 0.10 or more, particularly preferably 0.11 or more. The non-noble metal-XPS/ICP weight ratio of the catalyst of the present invention may be specified by combining any one of the above-mentioned lower limit values and any one of the above-mentioned upper limit values.

The non-noble metal-XPS/ICP weight ratio of the catalyst of the present invention corresponds to a ratio of the content of the non-noble metal in the surface of the catalyst of the present invention to the total content of the non-noble metal in the catalyst of the present invention. The non-noble metal in the surface of the catalyst of the present invention contributes to the catalytic activity of the catalyst of the present invention compared to the non-noble metal inside the catalyst of the present invention. On the other hand, the non-noble metal inside the catalyst of the present invention is less liable to aggregate compared to the non-noble metal in the surface of the catalyst of the present invention, and hence contributes to the durability of the catalyst of the present invention. Accordingly, a non-noble metal-XPS/ICP weight ratio of the catalyst of the present invention falling within the appropriate ranges contributes to effective achievement of both the catalytic activity and the durability of the catalyst of the present invention.

A ratio of a nitrogen content (atom%) to a carbon content (atom%) obtained by XPS (XPS-N/C ratio) of the catalyst of the present invention (a ratio obtained by dividing a nitrogen content (atom%) obtained by XPS of the catalyst of the present invention by a carbon content (atom%) obtained by XPS of the catalyst of the present invention) is not particularly limited as long as an effect of the present invention is obtained, but the ratio may be, for example, 0.1 or more, and is preferably 0.3 or more, more preferably 0.8 or more, still more preferably 1.5 or more, particularly preferably 1.8 or more.

The XPS-N/C ratio of the catalyst of the present invention may be, for example, 15.0 or less, may be 10.0 or less, may be 7.0 or less, may be 5.0 or less, or may be 3.0 or less. The XPS-N/C ratio of the catalyst of the present invention may be specified by combining any one of the above-mentioned lower limit values and any one of the above-mentioned upper limit values.

A ratio of an oxygen content (atom%) to a carbon content (atom%) obtained by XPS (XPS-O/C ratio) of the catalyst of the present invention (a ratio obtained by dividing an oxygen content (atom%) obtained by XPS of the catalyst of the present invention by a carbon content (atom%) obtained by XPS of the catalyst of the present invention) is not particularly limited as long as an effect of the present invention is obtained, but the ratio may be, for example, 0.1 or more, and is preferably 1.0 or more, more preferably 2.0 or more, still more preferably 3.0 or more, particularly preferably 4.0 or more.

The XPS-O/C ratio of the catalyst of the present invention may be, for example, 30.0 or less, and is preferably 20.0 or less, more preferably 15.0 or less, particularly preferably 11.0 or less. The XPS-O/C ratio of the catalyst of the present invention may be specified by combining any one of the above-mentioned lower limit values and any one of the above-mentioned upper limit values.

In the catalyst of the present invention, the number-average particle diameter of the catalyst metal particles obtained by X-ray diffractometry (XRD-number-average particle diameter) may be, for example, 50.0 nm or less, and is preferably 30.0 nm or less, and is more preferably 20.0 nm or less, still more preferably 15.0 nm or less, particularly preferably 10.0 nm or less.

The XRD-number-average particle diameter of the catalyst metal particles contained in the catalyst of the present invention may be, for example, 0.5 nm or more, may be 1.0 nm or more, or may be 1.5 nm or more. The XRD-number-average particle diameter of the catalyst metal particles may be specified by combining any one of the above-mentioned lower limit values and any one of the above-mentioned upper limit values.

In the catalyst of the present invention, the volume-average particle diameter of the catalyst metal particles obtained by X-ray diffractometry (XRD-volume-average particle diameter) may be, for example, 100.0 nm or less, and is preferably 80.0 nm or less, and is more preferably 50.0 nm or less, still more preferably 40.0 nm or less, particularly preferably 30.0 nm or less.

The XRD-volume-average particle diameter of the catalyst metal particles contained in the catalyst of the present invention may be, for example, 1.0 nm or more, may be 5.0 nm or more, may be 10.0 nm or more, or may be 15.0 nm or more. The XRD-volume-average particle diameter of the catalyst metal particles may be specified by combining any one of the above-mentioned lower limit values and any one of the above-mentioned upper limit values.

The catalyst of the present invention preferably has a carbon structure in which a ratio of the intensity of a D band having a peak top in the vicinity of 1,350 cm⁻¹ (e.g., in the range of 1,250 cm⁻¹ or more and 1,450 cm⁻¹ or less) (i.e., D band peak top intensity) to the intensity of a G band having a peak top in the vicinity of 1,600 cm⁻¹ (e.g., in the range of 1,500 cm⁻¹ or more and 1,700 cm⁻¹ or less) (i.e., G band peak top intensity) in a Raman spectrum obtained by Raman spectroscopy (Raman-D/G intensity ratio) falls within a specific range.

That is, the Raman-D/G intensity ratio of the catalyst of the present invention may be, for example, 1.15 or less, and is preferably 1.09 or less, more preferably 1.07 or less, still more preferably 1.05 or less, particularly preferably 1.04 or less.

The Raman-D/G intensity ratio of the catalyst of the present invention may be, for example, 0.50 or more, and is preferably 0.65 or more, more preferably 0.75 or more, still more preferably 0.85 or more, particularly preferably 0.90 or more. The Raman-D/G intensity ratio of the catalyst of the present invention may be specified by combining any one of the above-mentioned lower limit values and any one of the above-mentioned upper limit values.

In the Raman spectrum, the D band is a component derived from a curved structure including a defect and an edge, and the G band is a component derived from an ideal graphite structure. That is, the Raman-D/G intensity ratio of the catalyst of the present invention represents a balance between the amount of the curved structure including a defect and an edge and the amount of the ideal graphite structure in the catalyst of the present invention. Moreover, the ideal graphite structure contributes to the durability of the carbon structure, and hence, as the Raman-D/G intensity ratio of the catalyst of the present invention becomes lower, a ratio of the ideal graphite structure to the curved structure including a defect and an edge in the catalyst of the present invention is increased more. Thus, the durability of the catalyst of the present invention is improved, and aggregation of the catalyst metal particles supported on the carbon carrier is suppressed.

The Brunauer-Emmett-Teller (BET) specific surface area of the catalyst of the present invention obtained by a nitrogen adsorption method is not particularly limited as long as an effect of the present invention is obtained, but the BET specific surface area may be, for example, 200 m²/g or more, and is preferably 600 m²/g or more, more preferably 900 m²/g or more, still more preferably 1,000 m²/g or more, particularly preferably 1,100 m²/g or more.

The BET specific surface area of the catalyst of the present invention may be, for example, 3,000 m²/g or less, may be 2,000 m²/g or less, may be 1,800 m²/g or less, or may be 1,700 m²/g or less. The BET specific surface area of the catalyst of the present invention may be specified by combining any one of the above-mentioned lower limit values and any one of the above-mentioned upper limit values. The BET specific surface area of the catalyst of the present invention is a specific surface area obtained by a BET method from a nitrogen adsorption isotherm of the catalyst of the present invention at 77 K. In this embodiment, the "/g" in the unit of a numerical value indicates that the numerical value is a value per gram of the metal-supported catalyst.

The catalyst of the present invention has a porous structure derived from the carbon carrier. The catalyst of the present invention preferably has: micropores that are pores each having a diameter of less than 2 nm; mesopores that are pores each having a diameter of 2 nm or more and 50 nm or less; and macropores that are pores each having a diameter of more than 50 nm.

The Barrett-Joyner-Halenda (BJH) micropore area (the total pore area of the micropores) of the catalyst of the present invention obtained by a nitrogen adsorption method is not particularly limited as long as an effect of the present invention is obtained, but the BJH micropore area may be, for example, 100 m²/g or more, and is preferably 350 m²/g or more, more preferably 800 m²/g or more, still more preferably 1,000 m²/g or more, particularly preferably 1,100 m²/g or more.

The BJH micropore area of the catalyst of the present invention may be, for example, 2,500 m²/g or less, and is preferably 2,000 m²/g or less, more preferably 1,800 m²/g or less, still more preferably 1,700 m²/g or less, particularly preferably 1,500 m²/g or less. The BJH micropore area of the catalyst of the present invention may be specified by combining any one of the above-mentioned lower limit values and any one of the above-mentioned upper limit values. The BJH micropore area of the catalyst of the present invention is the pore area of the micropores obtained by a BJH method from a nitrogen adsorption isotherm of the catalyst of the present invention at 77 K.

A BJH mesopore area (the total pore area of the mesopores) of the catalyst of the present invention obtained by a nitrogen adsorption method is not particularly limited as long as an effect of the present invention is obtained, but the BJH mesopore area may be, for example, 100 m²/g or more, and is preferably 150 m²/g or more, more preferably 200 m²/g or more, still more preferably 220 m²/g or more, particularly preferably 250 m²/g or more.

The BJH mesopore area of the catalyst of the present invention may be, for example, 2,000 m²/g or less, and is preferably 1,000 m²/g or less, more preferably 900 m²/g or less, particularly preferably 850 m²/g or less. The BJH mesopore area of the catalyst of the present invention may be specified by combining any one of the above-mentioned lower limit values and any one of the above-mentioned upper limit values. The BJH mesopore area of the catalyst of the present invention is the pore area of the mesopores obtained by a BJH method from a nitrogen adsorption isotherm of the catalyst of the present invention at 77 K.

A BJH macropore area (the total pore area of the macropores) of the catalyst of the present invention obtained by a nitrogen adsorption method is not particularly limited as long as an effect of the present invention is obtained, but the BJH macropore area may be, for example, 0.5 m²/g or more, and is preferably 1.0 m²/g or more, more preferably 1.5 m²/g or more, still more preferably 2.0 m²/g or more, particularly preferably 2.4 m²/g or more.

The BJH macropore area of the catalyst of the present invention may be, for example, 100.0 m²/g or less, and is preferably 50.0 m²/g or less, more preferably 35.0 m²/g or less, still more preferably 20.0 m²/g or less, particularly preferably 13.0 m²/g or less. The BJH macropore area of the catalyst of the present invention may be specified by combining any one of the above-mentioned lower limit values and any one of the above-mentioned upper limit values. The BJH macropore area of the catalyst of the present invention is the pore area of the macropores obtained by a BJH method from a nitrogen adsorption isotherm of the catalyst of the present invention at 77 K.

A ratio of the BJH micropore area to the BJH macropore area (micropore/macropore area ratio) of the catalyst of the present invention is not particularly limited as long as an effect of the present invention is obtained, but the ratio may be, for example, 10 or more, and is preferably 30 or more, more preferably 50 or more, still more preferably 80 or more, particularly preferably 95 or more.

The micropore/macropore area ratio of the catalyst of the present invention may be, for example, 3,000 or less, and is preferably 1,500 or less, more preferably 1,000 or less, still more preferably 700 or less, particularly preferably 600 or less. The micropore/macropore area ratio of the catalyst of the present invention may be specified by combining any one of the above-mentioned lower limit values and any one of the above-mentioned upper limit values.

When the micropore/macropore area ratio is too low, that is, when the number of macropores is much larger than the number of micropores, for example, the number of catalyst metal particles supported adjacent to each other in one pore is increased. As a result, aggregation of the catalyst metal particles is liable to occur in the pores, and thus the durability is reduced.

On the other hand, when the micropore/macropore area ratio is too high, that is, when the number of micropores is much larger than the number of macropores, for example, far fewer of the catalyst metal particles are supported in the pores of the carbon carrier, and hence the ratio of the catalyst metal particles supported on the surface of the carbon carrier is increased. As a result, aggregation of the catalyst metal particles is liable to occur on the surface of the carbon carrier, and thus the durability is reduced. Accordingly, a micropore/macropore area ratio of the catalyst of the present invention falling within the appropriate ranges contributes to suppression of aggregation of the catalyst metal particles, which in turn contributes to achievement of high durability of the catalyst of the present invention.

A ratio of the BJH mesopore area to the BJH macropore area (mesopore/macropore area ratio) of the catalyst of the present invention is not particularly limited as long as an effect of the present invention is obtained, but the ratio may be, for example, 10 or more, and is preferably 20 or more, more preferably 40 or more, still more preferably 50 or more, particularly preferably 53 or more.

The mesopore/macropore area ratio of the catalyst of the present invention may be, for example, 1,000 or less, and is preferably 500 or less, more preferably 300 or less, still more preferably 200 or less, particularly preferably 150 or less. The mesopore/macropore area ratio of the catalyst of the present invention may be specified by combining any one of the above-mentioned lower limit values and any one of the above-mentioned upper limit values.

When the mesopore/macropore area ratio is too low, that is, when the number of macropores is much larger than the number of mesopores, for example, the number of catalyst metal particles supported adjacent to each other in one pore is increased. As a result, aggregation of the catalyst metal particles is liable to occur in the pores, and thus the durability is reduced. Accordingly, a mesopore/macropore area ratio of the catalyst of the present invention falling within the appropriate ranges contributes to suppression of aggregation of the catalyst metal particles, which in turn contributes to effective achievement of the durability of the catalyst of the present invention.

A ratio of the BJH micropore area to the BJH mesopore area (micropore/mesopore area ratio) of the catalyst of the present invention is not particularly limited as long as an effect of the present invention is obtained, but the ratio may be, for example, 0.1 or more, and is preferably 0.6 or more, more preferably 1.0 or more, still more preferably 1.3 or more, particularly preferably 1.5 or more.

The micropore/mesopore area ratio of the catalyst of the present invention may be, for example, 15.0 or less, and is preferably 10.0 or less, more preferably 8.0 or less, still more preferably 5.0 or less, particularly preferably 4.5 or less. The micropore/mesopore area ratio of the catalyst of the present invention may be specified by combining any one of the above-mentioned lower limit values and any one of the above-mentioned upper limit values.

When the micropore/mesopore area ratio is too high, that is, when the number of micropores is much larger than the number of mesopores, for example, far fewer of the catalyst metal particles are supported in the pores of the carbon carrier, and hence the ratio of the catalyst metal particles supported on the surface of the carbon carrier is increased. As a result, aggregation of the catalyst metal particles is liable to occur on the surface of the carbon carrier, and thus the durability is reduced.

On the other hand, when the micropore/mesopore area ratio is too low, that is, when the number of mesopores is much larger than the number of micropores, for example, the number of catalyst metal particles supported adjacent to each other in one pore is increased. As a result, aggregation of the catalyst metal particles is liable to occur in the pores, and thus the durability is reduced. Accordingly, a micropore/mesopore area ratio of the catalyst of the present invention falling within the appropriate ranges contributes to suppression of aggregation of the catalyst metal particles, which in turn contributes to achievement of high durability of the catalyst of the present invention.

A ratio of the total of the BJH micropore area and the BJH mesopore area to the BJH macropore area ((micropore+mesopore)/macropore area ratio) of the catalyst of the present invention is not particularly limited as long as an effect of the present invention is obtained, but the ratio may be, for example, 30 or more, and is preferably 70 or more, more preferably 100 or more, still more preferably 130 or more, particularly preferably 150 or more.

The (micropore+mesopore)/macropore area ratio of the catalyst of the present invention may be, for example, 3,500 or less, and is preferably 2,000 or less, more preferably 1,000 or less, still more preferably 800 or less, particularly preferably 700 or less. The (micropore+mesopore)/macropore area ratio of the catalyst of the present invention may be specified by combining any one of the above-mentioned lower limit values and any one of the above-mentioned upper limit values.

When the (micropore+mesopore)/macropore area ratio is too low, that is, when the number of macropores is much larger than the number of micropores and mesopores, the number of catalyst metal particles supported adjacent to each other in one pore is increased. As a result, aggregation of the catalyst metal particles is liable to occur in the pores, and thus the durability is reduced. Accordingly, a (micropore+mesopore)/macropore area ratio of the catalyst of the present invention falling within the appropriate ranges contributes to suppression of aggregation of the catalyst metal particles, which in turn contributes to effective achievement of the durability of the catalyst of the present invention.

A ratio of the BET specific surface area to the BJH micropore area (specific surface area/micropore area ratio) of the catalyst of the present invention is not particularly limited as long as an effect of the present invention is obtained, but the ratio may be, for example, 0.5 or more, and is preferably 0.6 or more, more preferably 0.7 or more, still more preferably 0.9 or more, particularly preferably 1.0 or more.

The specific surface area/micropore area ratio of the catalyst of the present invention may be, for example, 5.0 or less, and is preferably 2.5 or less, more preferably 2.0 or less, still more preferably 1.5 or less, particularly preferably 1.2 or less. The specific surface area/micropore area ratio of the catalyst of the present invention may be specified by combining any one of the above-mentioned lower limit values and any one of the above-mentioned upper limit values.

When the specific surface area/micropore area ratio is too high, that is, when the number of pores other than the micropores is much larger than the number of micropores (for example, when the number of pores having larger pore diameters than the micropores is much larger than the number of micropores), for example, the number of catalyst metal particles supported adjacent to each other in one pore is increased. As a result, aggregation of the catalyst metal particles is liable to occur in the pores, and thus the durability is reduced.

On the other hand, when the specific surface area/micropore area ratio is too low, that is, when the number of micropores is much larger than the number of pores other than the micropores (for example, when the number of micropores is much larger than the number of pores having larger pore diameters than the micropores), for example, far fewer of the catalyst metal particles are supported in the pores of the carbon carrier, and hence the ratio of the catalyst metal particles supported on the surface of the carbon carrier is increased. As a result, aggregation of the catalyst metal particles is liable to occur on the surface of the carbon carrier, and thus the durability is reduced. Accordingly, a specific surface area/micropore area ratio of the catalyst of the present invention falling within the appropriate ranges contributes to suppression of aggregation of the catalyst metal particles, which in turn contributes to effective achievement of the durability of the catalyst of the present invention.

A ratio of the BET specific surface area to the BJH mesopore area (specific surface area/mesopore area ratio) of the catalyst of the present invention is not particularly limited as long as an effect of the present invention is obtained, but the ratio may be, for example, 1.0 or more, and is preferably 1.3 or more, more preferably 1.5 or more, still more preferably 1.7 or more, particularly preferably 1.8 or more.

The specific surface area/mesopore area ratio of the catalyst of the present invention may be, for example, 10.0 or less, and is preferably 8.0 or less, more preferably 6.0 or less, still more preferably 4.4 or less, particularly preferably 4.3 or less. The specific surface area/mesopore area ratio of the catalyst of the present invention may be specified by combining any one of the above-mentioned lower limit values and any one of the above-mentioned upper limit values.

When the specific surface area/mesopore area ratio is too high, that is, when the number of pores other than the mesopores is much larger than the number of the mesopores (for example, when the number of pores that are smaller than the mesopores is much larger than the number of the mesopores), for example, far fewer of the catalyst metal particles are supported in the pores of the carbon carrier, and hence the ratio of the catalyst metal particles supported on the surface of the carbon carrier is increased. As a result, aggregation of the catalyst metal particles is liable to occur on the surface of the carbon carrier, and thus the durability is reduced.

On the other hand, when the specific surface area/mesopore area ratio is too low, that is, when the number of pores other than the mesopores is much smaller than the number of the mesopores (for example, when the number of pores that are smaller than the mesopores is much smaller than the number of the mesopores), for example, the number of catalyst metal particles supported adjacent to each other in one pore is increased. As a result, aggregation of the catalyst metal particles is liable to occur in the pores, and thus the durability is reduced. Accordingly, a specific surface area/mesopore area ratio of the catalyst of the present invention falling within the appropriate ranges contributes to suppression of aggregation of the catalyst metal particles, which in turn contributes to achievement of high durability of the catalyst of the present invention.

A ratio of the BET specific surface area to the BJH macropore area (specific surface area/macropore area ratio) of the catalyst of the present invention is not particularly limited as long as an effect of the present invention is obtained, but the ratio may be, for example, 20 or more, and is preferably 30 or more, more preferably 60 or more, still more preferably 80 or more, particularly preferably 100 or more.

The specific surface area/macropore area ratio of the catalyst of the present invention may be, for example, 2,300 or less, and is preferably 2,000 or less, more preferably 1,500 or less, still more preferably 1,000 or less, particularly preferably 600 or less. The specific surface area/macropore area ratio of the catalyst of the present invention may be specified by combining any one of the above-mentioned lower limit values and any one of the above-mentioned upper limit values.

When the specific surface area/macropore area ratio is too low, that is, when the number of pores other than the macropores is much smaller than the number of the macropores, for example, the number of catalyst metal particles supported adjacent to each other in one pore is increased. As a result, aggregation of the catalyst metal particles is liable to occur in the pores, and thus the durability is reduced. Accordingly, a specific surface area/macropore area ratio of the catalyst of the present invention falling within the appropriate ranges contributes to suppression of aggregation of the catalyst metal particles, which in turn contributes to effective achievement of the durability of the catalyst of the present invention.

A BJH micropore volume (total pore volume of the micropores) of the catalyst of the present invention obtained by a nitrogen adsorption method is not particularly limited as long as an effect of the present invention is obtained, but the BJH micropore volume may be, for example, 0.05 cm³/g or more, and is preferably 0.15 cm³/g or more, more preferably 0.30 cm³/g or more, still more preferably 0.35 cm³/g or more, particularly preferably 0.37 cm³/g or more.

The BJH micropore volume of the catalyst of the present invention may be, for example, 2.00 cm³/g or less, and is preferably 1.00 cm³/g or less, more preferably 0.80 cm³/g or less, still more preferably 0.70 cm³/g or less, particularly preferably 0.68 cm³/g or less. The BJH micropore volume of the catalyst of the present invention may be specified by combining any one of the above-mentioned lower limit values and any one of the above-mentioned upper limit values. The BJH micropore volume of the catalyst of the present invention is the pore volume of the micropores obtained by a BJH method from a nitrogen adsorption isotherm of the catalyst of the present invention at 77 K.

A BJH mesopore volume (total pore volume of the mesopores) of the catalyst of the present invention obtained by a nitrogen adsorption method is not particularly limited as long as an effect of the present invention is obtained, but the BJH mesopore volume may be, for example, 0.10 cm³/g or more, and is preferably 0.15 cm³/g or more, more preferably 0.20 cm³/g or more, particularly preferably 0.25 cm³/g or more.

The BJH mesopore volume of the catalyst of the present invention may be, for example, 2.00 cm³/g or less, and is preferably 1.00 cm³/g or less, more preferably 0.90 cm³/g or less, still more preferably 0.80 cm³/g or less, particularly preferably 0.74 cm³/g or less. The BJH mesopore volume of the catalyst of the present invention may be specified by combining any one of the above-mentioned lower limit values and any one of the above-mentioned upper limit values. The BJH mesopore volume of the catalyst of the present invention is the pore volume of the mesopores obtained by a BJH method from a nitrogen adsorption isotherm of the catalyst of the present invention at 77 K.

A BJH macropore volume (total pore volume of the macropores) of the catalyst of the present invention obtained by a nitrogen adsorption method is not particularly limited as long as an effect of the present invention is obtained, but the BJH macropore volume may be, for example, 0.01 cm³/g or more, and is preferably 0.02 cm³/g or more, more preferably 0.30 cm³/g or more, still more preferably 0.04 cm³/g or more, particularly preferably 0.05 cm³/g or more.

The BJH macropore volume of the catalyst of the present invention may be, for example, 1.00 cm³/g or less, and is preferably 0.80 cm³/g or less, more preferably 0.50 cm³/g or less, still more preferably 0.30 cm³/g or less, particularly preferably 0.25 cm³/g or less. The BJH macropore volume of the catalyst of the present invention may be specified by combining any one of the above-mentioned lower limit values and any one of the above-mentioned upper limit values. The BJH macropore volume of the catalyst of the present invention is the pore volume of the macropores obtained by a BJH method from a nitrogen adsorption isotherm of the catalyst of the present invention at 77 K.

A ratio of the BJH mesopore volume to the BJH micropore volume (mesopore/micropore volume ratio) of the catalyst of the present invention is not particularly limited as long as an effect of the present invention is obtained, but the ratio may be, for example, 0.30 or more, and is preferably 0.40 or more, more preferably 0.45 or more, still more preferably 0.50 or more, particularly preferably 0.55 or more.

The mesopore/micropore volume ratio of the catalyst of the present invention may be, for example, 7.80 or less, and is preferably 6.50 or less, more preferably 3.00 or less, still more preferably 1.65 or less, particularly preferably 1.50 or less. The mesopore/micropore volume ratio of the catalyst of the present invention may be specified by combining any one of the above-mentioned lower limit values and any one of the above-mentioned upper limit values.

When the mesopore/micropore volume ratio is too low, that is, when the number of mesopores is much smaller than the number of micropores, for example, far fewer of the catalyst metal particles are supported in the pores of the carbon carrier, and hence the ratio of the catalyst metal particles supported on the surface of the carbon carrier is increased. As a result, aggregation of the catalyst metal particles is liable to occur on the surface of the carbon carrier, and thus the durability is reduced.

On the other hand, when the mesopore/micropore volume ratio is too high, that is, when the number of mesopores is much larger than the number of micropores, for example, the number of catalyst metal particles supported adjacent to each other in one pore is increased. As a result, aggregation of the catalyst metal particles is liable to occur in the pores, and thus the durability is reduced. Accordingly, a mesopore/micropore volume ratio of the catalyst of the present invention falling within the appropriate ranges contributes to suppression of aggregation of the catalyst metal particles, which in turn contributes to achievement of high durability of the catalyst of the present invention.

The catalyst of the present invention is a catalyst for hydrogen production. That is, the catalyst of the present invention has excellent catalytic activity for effectively catalyzing a hydrogen generation reaction. In addition, the catalyst of the present invention also has excellent durability. That is, the catalyst of the present invention has both excellent catalytic activity and excellent durability. Accordingly, through use of the catalyst of the present invention, effective hydrogen production can be achieved.

A method of producing hydrogen according to an embodiment of the present invention (hereinafter referred to as "method of the present invention") is a method of producing hydrogen using the catalyst of the present invention described above. That is, the method of the present invention includes, for example, producing hydrogen by reforming, hydrolyzing, or thermally decomposing a hydrogen-generating raw material in the presence of the catalyst of the present invention. The hydrogen-generating raw material is not particularly limited as long as the raw material is a compound that generates hydrogen through reforming, hydrolysis, or thermal decomposition (a hydrogen source compound). The hydrogen source compound is preferably, for example, one or more selected from the group consisting of: a hydrocarbon compound; an oxygen-containing organic compound; and a nitrogen-hydrogen compound.

The hydrocarbon compound is not particularly limited as long as the compound generates hydrogen through reforming or thermal decomposition, but is preferably, for example, one or more selected from the group consisting of: an aliphatic hydrocarbon; an alicyclic hydrocarbon; and an aromatic hydrocarbon. The aliphatic hydrocarbon is, for example, preferably an aliphatic hydrocarbon having 1 to 20 carbon atoms, particularly preferably an aliphatic hydrocarbon having 1 to 12 carbon atoms. Specifically, the aliphatic hydrocarbon is preferably, for example, one or more selected from the group consisting of: methane; ethane; ethylene; propane; propylene; and butane. The alicyclic hydrocarbon is preferably, for example, an alicyclic hydrocarbon having 3 to 12 carbon atoms. Specifically, the alicyclic hydrocarbon is preferably, for example, one or more selected from the group consisting of: cyclopropane; cyclobutane; cyclopentane; and cyclohexane. The aromatic hydrocarbon is preferably, for example, an aromatic hydrocarbon having 5 to 16 carbon atoms. Specifically, the aromatic hydrocarbon is preferably, for example, one or more selected from the group consisting of: benzene; toluene; xylene; ethylbenzene; and tetralin.

The oxygen-containing organic compound is not particularly limited as long as the compound generates hydrogen through reforming or thermal decomposition, but is preferably, for example, one or more selected from the group consisting of: an alcohol; an ether; an ester; and a ketone. The alcohol is preferably, for example, an alcohol having 1 to 12 carbon atoms. Specifically, the alcohol is preferably, for example, one or more selected from the group consisting of: methanol; ethanol; propanol; and butanol. The ether is preferably, for example, an ether having 2 to 12 carbon atoms. Specifically, the ether is preferably, for example, one or more selected from the group consisting of: dimethyl ether; ethyl methyl ether; diethyl ether; oxacyclopentane; and crown ether. The ester is preferably, for example, an ester having 2 to 12 carbon atoms. Specifically, the ester is preferably, for example, one or more selected from the group consisting of: methyl formate; methyl acetate; ethyl acetate; propyl acetate; methyl propionate; methyl butyrate; ethyl butyrate; methyl acrylate; ethyl acrylate; butyl acrylate; methyl methacrylate; and butyl methacrylate. The ketone is preferably, for example, a ketone having 3 to 6 carbon atoms. Specifically, the ketone is preferably, for example, one or more selected from the group consisting of: propanone; pentanone; butanone; and cyclohexanone.

The nitrogen-hydrogen compound is not particularly limited as long as the compound generates hydrogen through hydrolysis or thermal decomposition, but is preferably, for example, one or more selected from the group consisting of: an azane; and a boron-nitrogen-hydrogen compound. Specifically, the azane is preferably, for example, one or more selected from the group consisting of: ammonia; hydrazine; and triazane. The boron-nitrogen-hydrogen compound is preferably, for example, ammonia borane.

In the method of the present invention, hydrogen is generated by reforming, hydrolyzing, or thermally decomposing the hydrogen-generating raw material in the presence of the catalyst of the present invention. That is, in the method of the present invention, the hydrogen-generating raw material and the catalyst of the present invention are brought into contact with each other while being heated. The form of the hydrogen-generating raw material to be brought into contact with the catalyst of the present invention is not particularly limited as long as hydrogen is generated through reforming, hydrolysis, or thermal decomposition of the hydrogen-generating raw material. For example, the hydrogen-generating raw material in a gas form, in a liquid form, or in a solid form may be brought into contact with the catalyst of the present invention.

In the method of the present invention, a temperature at which the hydrogen-generating raw material is heated (i.e., a temperature at which the catalyst of the present invention and the hydrogen-generating raw material are brought into contact with each other) is not particularly limited as long as hydrogen is generated through reforming, hydrolysis, or thermal decomposition of the hydrogen-generating raw material, and the temperature may be, for example, 30°C or more, may be 50°C or more, may be 100°C or more, may be 200°C or more, may be 250°C or more, or may be 300°C or more. In the method of the present invention, the temperature at which the hydrogen-generating raw material is heated may be, for example, 1,000°C or less, or may be 800°C or less. In the method of the present invention, the temperature at which the hydrogen-generating raw material is heated may be specified by combining any one of the above-mentioned lower limit values and any one of the above-mentioned upper limit values.

In the method of the present invention, the form of the catalyst of the present invention to be brought into contact with the hydrogen-generating raw material is not particularly limited as long as an effect of the present invention is obtained, and for example, powder, granules, pellets, a honeycomb structure, or a filter including the catalyst of the present invention may be adopted.

Next, specific Examples according to an embodiment of the present invention will be described.

### Examples

### [Carbon Carrier A]

3.7 kg of polyacrylonitrile (PAN), 3.7 kg of 2-methylimidazole, 16.2 kg of zinc chloride (ZnCl₂), 0.07 kg of iron(III) chloride hexahydrate (FeCl₃·6H₂O), and 56.2 kg of dimethylformamide were mixed. The solvent was removed from the resultant mixture through drying. The mixture having been dried was heated in the atmosphere to be subjected to infusibilization at 250°C.

The mixture after the infusibilization was carbonized by being heated at 1,300°C under a gauge pressure of 0.90 MPa in a nitrogen atmosphere. Dilute hydrochloric acid was added to a carbonized material obtained through the carbonization, followed by stirring. After that, a suspension containing the carbonized material was filtered with a filtration membrane, and the carbonized material was washed with distilled water until the filtrate became neutral. Thus, metal removal treatment through acid washing was performed. The carbonized material after the metal removal treatment was pulverized with a fine pulverizer until its median particle diameter became 1 µm or less.

Further, the carbonized material after the pulverization was heated at 900°C for 1 hour under normal pressure in an atmosphere through which a 100% ammonia gas was made to flow at 0.15 L/min. After that, the ammonia gas was replaced with a nitrogen gas, and the carbonized material was heated at 500°C for 10 minutes under normal pressure in a nitrogen atmosphere. After that, the carbonized material was cooled through natural cooling in the nitrogen atmosphere. The thus obtained carbonized material in a particulate form was used as a carbon carrier A.

### [Carbon Carrier B]

A carbonized material in a particulate form was obtained in the same manner as in the case of the carbon carrier A described above except that 6.0 g of polyacrylonitrile (PAN), 6.0 g of 2-methylimidazole, 26.0 g of zinc chloride (ZnCl₂), 0.11 g of iron(III) chloride hexahydrate (FeCl₃·6H₂O), and 300 mL of dimethylformamide were used, and the carbonized material was used as a carbon carrier B.

### [Carbon Carrier C]

6.0 g of polyacrylonitrile (PAN), 6.0 g of 2-methylimidazole, 26.0 g of zinc chloride (ZnCl₂), 0.11 g of iron(III) chloride hexahydrate (FeCl₃·6H₂O), and 300 mL of dimethylformamide were mixed. The solvent was removed from the resultant mixture through drying. The mixture having been dried was heated in the atmosphere to be subjected to infusibilization at 250°C.

The mixture after the infusibilization was carbonized by being heated at 1,300°C under normal pressure in a nitrogen atmosphere. Dilute hydrochloric acid was added to a carbonized material obtained through the carbonization, followed by stirring. After that, a suspension containing the carbonized material was filtered with a filtration membrane, and the carbonized material was washed with distilled water until the filtrate became neutral. Thus, metal removal treatment through acid washing was performed. The carbonized material after the metal removal treatment was pulverized with a fine pulverizer until its median particle diameter became 1 µm or less.

Further, the carbonized material after the pulverization was heated at 900°C for 1 hour under normal pressure in an atmosphere through which a 100% ammonia gas was made to flow at 0.15 L/min. After that, the ammonia gas was replaced with a nitrogen gas, and the carbonized material was heated at 500°C for 10 minutes under normal pressure in a nitrogen atmosphere.

After that, the carbonized material was impregnated with an aqueous solution containing iron(III) chloride hexahydrate (FeCl₃·6H₂O) under the condition in which the supported amount of iron became 1 wt%, and the carbonized material after the impregnation was dried. The thus obtained carbonized material in a particulate form was used as a carbon carrier C.

### [Carbon Carrier D]

0.4 g of polyvinylpyridine, 0.45 g of iron(III) chloride hexahydrate (FeCl₃·6H₂O), and 0.5 g of ketjen black (ECP600JD, manufactured by Lion Specialty Chemicals Co., Ltd.) were loaded into a mortar and uniformly mixed. The resultant mixture was carbonized by being heated and held at 900°C for 1 hour under normal pressure in a nitrogen atmosphere. The thus obtained carbonized material in a particulate form was used as a carbon carrier D.

### [Carbon Carrier E]

Commercially available ketjen black (ECP600JD, manufactured by Lion Specialty Chemicals Co., Ltd.) was used as a carbon carrier E.

### [Carbon Carrier F]

Commercially available coconut shell activated carbon (YP-50F, manufactured by Kuraray Co., Ltd.) was used as a carbon carrier F.

### [Carbon Carrier G]

Commercially available coconut shell activated carbon (SHIRASAGI TC, manufactured by Osaka Gas Chemicals Co., Ltd.) was used as a carbon carrier G.

### [Example 1]

The carbon carrier A was added to a ruthenium aqueous solution containing ruthenium chloride (RuCl₃) serving as a ruthenium precursor (an aqueous solution containing ruthenium chloride in an amount corresponding to a target supported amount of ruthenium of 5 wt%), followed by stirring and mixing for 16 hours. After that, the resultant mixed liquid was dried by being heated at 100°C for 5 hours in air.

Further, the resultant solid was subjected to heat treatment (gas phase reduction treatment) at 500°C for 60 minutes under normal pressure in a hydrogen atmosphere (hydrogen gas: 100 vol%). Thus, a metal-supported catalyst including: the carbon carrier A; and catalyst metal particles containing ruthenium supported on the carbon carrier A was obtained.

### [Example 2]

First, the carbon carrier A was added to a cobalt aqueous solution containing cobalt chloride hexahydrate (CoCl₂·6H₂O) serving as a cobalt precursor (an aqueous solution containing cobalt chloride hexahydrate in an amount corresponding to a target supported amount of cobalt of 18 wt%), followed by stirring and mixing for 16 hours. After that, the resultant mixed liquid was dried by being heated at 100°C for 5 hours in air.

Next, the mixture after the drying was added to a ruthenium aqueous solution containing ruthenium chloride (RuCl₃) serving as a ruthenium precursor (an aqueous solution containing ruthenium chloride in an amount corresponding to a target supported amount of ruthenium of 5 wt%), followed by stirring and mixing for 16 hours. After that, the resultant mixed liquid was dried by being heated at 100°C for 5 hours in air.

Further, the resultant solid was subjected to heat treatment (gas phase reduction treatment) at 500°C for 60 minutes under normal pressure in a hydrogen atmosphere (hydrogen gas: 100 vol%). Thus, a metal-supported catalyst including: the carbon carrier A; and catalyst metal particles containing ruthenium and cobalt supported on the carbon carrier A, was obtained.

### [Example 3]

A metal-supported catalyst including: the carbon carrier B; and catalyst metal particles containing ruthenium and cobalt supported on the carbon carrier B was obtained in the same manner as in Example 2 described above except that the carbon carrier B was used in place of the carbon carrier A.

### [Example 4]

The carbon carrier A was added to a ruthenium/cobalt aqueous solution containing cobalt chloride hexahydrate (CoCl₂·6H₂O) serving as a cobalt precursor and ruthenium chloride (RuCl₃) serving as a ruthenium precursor (an aqueous solution containing cobalt chloride hexahydrate in an amount corresponding to a target supported amount of cobalt of 18 wt% and ruthenium chloride in an amount corresponding to a target supported amount of ruthenium of 5 wt%), followed by stirring and mixing for 16 hours. After that, the resultant mixed liquid was dried by being heated at 100°C for 5 hours in air.

Further, the resultant solid was subjected to heat treatment (gas phase reduction treatment) at 500°C for 60 minutes under normal pressure in a hydrogen atmosphere (hydrogen gas: 100 vol%). Thus, a metal-supported catalyst including: the carbon carrier A; and catalyst metal particles containing ruthenium and cobalt supported on the carbon carrier A, was obtained.

### [Example 5]

First, the carbon carrier A was added to a ruthenium aqueous solution containing ruthenium chloride (RuCl₃) serving as a ruthenium precursor (an aqueous solution containing ruthenium chloride in an amount corresponding to a target supported amount of ruthenium of 5 wt%), followed by stirring and mixing for 16 hours. After that, the resultant mixed liquid was dried by being heated at 100°C for 5 hours in air.

Next, the mixture after the drying was added to a cobalt aqueous solution containing cobalt chloride hexahydrate (CoCl₂·6H₂O) serving as a cobalt precursor (an aqueous solution containing cobalt chloride hexahydrate in an amount corresponding to a target supported amount of cobalt of 18 wt%), followed by stirring and mixing for 16 hours. After that, the resultant mixed liquid was dried by being heated at 100°C for 5 hours in air.

Further, the resultant solid was subjected to heat treatment (gas phase reduction treatment) at 500°C for 60 minutes under normal pressure in a hydrogen atmosphere (hydrogen gas: 100 vol%). Thus, a metal-supported catalyst including: the carbon carrier A; and catalyst metal particles containing ruthenium and cobalt supported on the carbon carrier A was obtained.

### [Example 6]

A metal-supported catalyst including: the carbon carrier A; and catalyst metal particles containing ruthenium and copper supported on the carbon carrier A, was obtained in the same manner as in Example 2 described above except that a copper aqueous solution containing copper chloride dihydrate (CuCl₂·2H₂O) serving as a copper precursor (an aqueous solution containing copper chloride dihydrate in an amount corresponding to a target supported amount of copper of 18 wt%) was used in place of the cobalt aqueous solution.

### [Example 7]

A metal-supported catalyst including: the carbon carrier A; and catalyst metal particles containing ruthenium and nickel supported on the carbon carrier A was obtained in the same manner as in Example 2 described above except that a nickel aqueous solution containing nickel chloride hexahydrate (NiCl₂·6H₂O) serving as a nickel precursor (an aqueous solution containing nickel chloride hexahydrate in an amount corresponding to a target supported amount of nickel of 18 wt%) was used in place of the cobalt aqueous solution.

### [Example 8]

A metal-supported catalyst including: the carbon carrier A; and catalyst metal particles containing ruthenium and zinc supported on the carbon carrier A, was obtained in the same manner as in Example 2 described above except that a zinc aqueous solution containing zinc chloride (ZnCl₂) serving as a zinc precursor (an aqueous solution containing zinc chloride in an amount corresponding to a target supported amount of zinc of 18 wt%) was used in place of the cobalt aqueous solution.

### [Example 9]

A metal-supported catalyst including: the carbon carrier A; and catalyst metal particles containing ruthenium and iron supported on the carbon carrier A, was obtained in the same manner as in Example 2 described above except that an iron aqueous solution containing iron(III) chloride hexahydrate (FeCl₃·6H₂O) serving as an iron precursor (an aqueous solution containing iron(III) chloride hexahydrate in an amount corresponding to a target supported amount of iron of 1 wt%) was used in place of the cobalt aqueous solution.

### [Example 10]

A metal-supported catalyst including: the carbon carrier A; and catalyst metal particles containing ruthenium and iron supported on the carbon carrier A, was obtained in the same manner as in Example 2 described above except that an iron aqueous solution containing iron(III) chloride hexahydrate in an amount corresponding to a target supported amount of iron of 18 wt% was used in place of the cobalt aqueous solution.

### [Example 11]

A metal-supported catalyst including: the carbon carrier A; and catalyst metal particles containing palladium and cobalt supported on the carbon carrier A, was obtained in the same manner as in Example 2 described above except that a palladium aqueous solution containing dinitrodiamminepalladium(II) (Pd(NH₃)₂(NO₂)₂) serving as a palladium precursor (an aqueous solution containing dinitrodiamminepalladium(II) in an amount corresponding to a target supported amount of palladium of 5 wt%) was used in place of the ruthenium aqueous solution.

### [Example 12]

A metal-supported catalyst including: the carbon carrier A; and catalyst metal particles containing palladium and cobalt supported on the carbon carrier A was obtained in the same manner as in Example 2 described above except that: a palladium aqueous solution containing dinitrodiamminepalladium(II) in an amount corresponding to a target supported amount of palladium of 15 wt% was used in place of the ruthenium aqueous solution; and an aqueous solution containing cobalt chloride hexahydrate in an amount corresponding to a target supported amount of cobalt of 16 wt% was used as the cobalt aqueous solution.

### [Example 13]

A metal-supported catalyst including: the carbon carrier A; and catalyst metal particles containing platinum and cobalt supported on the carbon carrier A was obtained in the same manner as in Example 2 described above except that a platinum aqueous solution containing chloroplatinic acid (H₂PtCl₆) serving as a platinum precursor (an aqueous solution containing chloroplatinic acid in an amount corresponding to a target supported amount of platinum of 5 wt%) was used in place of the ruthenium aqueous solution.

### [Example 14]

A metal-supported catalyst including: the carbon carrier A; and catalyst metal particles containing platinum and cobalt supported on the carbon carrier A, was obtained in the same manner as in Example 2 described above except that: a platinum aqueous solution containing chloroplatinic acid in an amount corresponding to a target supported amount of platinum of 5 wt% was used in place of the ruthenium aqueous solution; and an aqueous solution containing cobalt chloride hexahydrate in an amount corresponding to a target supported amount of cobalt of 16 wt% was used as the cobalt aqueous solution.

### [Example 15]

A metal-supported catalyst including: the carbon carrier C; and catalyst metal particles containing ruthenium and cobalt supported on the carbon carrier C, was obtained in the same manner as in Example 2 described above except that: the carbon carrier C was used in place of the carbon carrier A; an aqueous solution containing ruthenium chloride in an amount corresponding to a target supported amount of ruthenium of 1 wt% was used as the ruthenium aqueous solution; and an aqueous solution containing cobalt chloride hexahydrate in an amount corresponding to a target supported amount of cobalt of 19 wt% was used as the cobalt aqueous solution.

### [Example 16]

A metal-supported catalyst including: the carbon carrier C; and catalyst metal particles containing ruthenium and cobalt supported on the carbon carrier C, was obtained in the same manner as in Example 2 described above except that the carbon carrier C was used in place of the carbon carrier A.

### [Example 17]

A metal-supported catalyst including: the carbon carrier C; and catalyst metal particles containing ruthenium and cobalt supported on the carbon carrier C, was obtained in the same manner as in Example 2 described above except that: the carbon carrier C was used in place of the carbon carrier A; an aqueous solution containing ruthenium chloride in an amount corresponding to a target supported amount of ruthenium of 10 wt% was used as the ruthenium aqueous solution; and an aqueous solution containing cobalt chloride hexahydrate in an amount corresponding to a target supported amount of cobalt of 17 wt% was used as the cobalt aqueous solution.

### [Example 18]

A metal-supported catalyst including: the carbon carrier D; and catalyst metal particles containing ruthenium and cobalt supported on the carbon carrier D, was obtained in the same manner as in Example 2 described above except that the carbon carrier D was used in place of the carbon carrier A.

### [Example 19]

A metal-supported catalyst including: the carbon carrier D; and catalyst metal particles containing ruthenium and cobalt supported on the carbon carrier D, was obtained in the same manner as in Example 2 described above except that: the carbon carrier D was used in place of the carbon carrier A; an aqueous solution containing ruthenium chloride in an amount corresponding to a target supported amount of ruthenium of 9 wt% was used as the ruthenium aqueous solution; and an aqueous solution containing cobalt chloride hexahydrate in an amount corresponding to a target supported amount of cobalt of 17 wt% was used as the cobalt aqueous solution.

### [Example C1]

A metal-supported catalyst including: the carbon carrier E; and catalyst metal particles containing nickel and cobalt supported on the carbon carrier E, was obtained in the same manner as in Example 2 described above except that a nickel aqueous solution containing nickel chloride hexahydrate (NiCl₂·6H₂O) serving as a nickel precursor (an aqueous solution containing nickel chloride hexahydrate in an amount corresponding to a target supported amount of nickel of 5 wt%) was used in place of the ruthenium aqueous solution.

### [Example C2]

A metal-supported catalyst including: the carbon carrier E; and catalyst metal particles containing ruthenium and cobalt supported on the carbon carrier E, was obtained in the same manner as in Example 2 described above except that the carbon carrier E was used in place of the carbon carrier A.

### [Example C3]

A metal-supported catalyst including: the carbon carrier F; and catalyst metal particles containing ruthenium and cobalt supported on the carbon carrier F, was obtained in the same manner as in Example 2 described above except that the carbon carrier F was used in place of the carbon carrier A.

### [Example C4]

A metal-supported catalyst including: the carbon carrier G; and catalyst metal particles containing ruthenium and cobalt supported on the carbon carrier G, was obtained in the same manner as in Example 2 described above except that the carbon carrier G was used in place of the carbon carrier A.

### [Hydrogen Production Example]

Ethanol was used as an oxygen-containing organic compound, and hydrogen was generated by steam reforming of ethanol in the presence of any one of the metal-supported catalysts described above. Specifically, first, pretreatment of the metal-supported catalyst was performed. That is, first, 8 mg of the metal-supported catalyst was loaded into a reaction tube made of quartz. Next, the reaction tube was placed in a catalyst analyzer (manufactured by MicrotracBEL Corporation), and the metal-supported catalyst was subjected to pretreatment by heating the reaction tube up to 600°C at a temperature increase rate of 10°C/min under a helium gas (helium flow rate=50 mL/min) atmosphere. After that, the reaction tube was naturally cooled to 100°C under a helium gas (helium flow rate=50 mL/min) atmosphere.

Next, a gas containing ethanol was brought into contact with the metal-supported catalyst while being heated, and a reaction gas was measured for the amount of hydrogen to be generated with a quadrupole mass spectrometer (QMS). That is, while a mixed gas of a helium gas, ethanol, and steam (helium flow rate=50 mL/min, ethanol flow rate=14 mL/min, and steam flow rate=40 mL/min) was made to flow, the reaction tube was heated at a temperature increase rate of 10°C/min and held at 500°C for 30 minutes. During the holding at 500°C, hydrogen generated was detected at a mass number of 2, and correlation between a temperature (abscissa) and a detection intensity (ordinate) was recorded for the resultant spectrum.

Meanwhile, a hydrogen gas was used as a reference gas, and a calibration curve showing correlation between a hydrogen generation amount and a detection intensity was created. Then, a hydrogen generation rate (mmol/(min·g)) of the metal-supported catalyst at 500°C (initial hydrogen generation rate) was obtained by dividing a value quantitatively determined based on the detection intensity obtained by the measurement and the calibration curve (hydrogen generation amount (mmol/min) 1 minute after the temperature reached 500°C) by the weight of the metal-supported catalyst used for the measurement.

In addition, similarly, a hydrogen generation rate (mmol/(min·g)) 30 minutes after the temperature reached 500°C was obtained. Then, a reduction in hydrogen generation rate was calculated by subtracting the hydrogen generation rate after 30 minutes from the initial hydrogen generation rate obtained as described above. Further, the reduction in hydrogen generation rate was divided by the initial hydrogen generation rate, and the resultant value was multiplied by 100 to provide an activity reduction rate (%).

### [Specific Surface Area, Pore Areas, and Pore Volumes]

The specific surface area, pore areas, and pore volumes of the metal-supported catalyst obtained by a nitrogen adsorption method were measured with a surface area and porosity analyzer (TriStar II 3020, manufactured by Shimadzu Corporation).

Specifically, first, water adsorbed on the metal-supported catalyst was removed by holding 0.1 g of the metal-supported catalyst at 100°C and 6.7×10⁻² Pa for 3 hours. Next, a nitrogen adsorption isotherm at 77 K was obtained by a BET method. The nitrogen adsorption isotherm at 77 K was obtained by measuring a change in nitrogen adsorption amount on the metal-supported catalyst in association with a change in pressure of a nitrogen gas at a temperature of 77 K. Then, the BET specific surface area (m²/g) of the metal-supported catalyst obtained by a nitrogen adsorption method was obtained from the nitrogen adsorption isotherm at a temperature of 77 K.

In addition, the micropore area (m²/g), mesopore area (m²/g), macropore area (m²/g), micropore volume (cm³/g), mesopore volume (cm³/g), and macropore volume (cm³/g) of the metal-supported catalyst were obtained by a BJH method from the nitrogen adsorption isotherm at a temperature of 77 K.

### [Inductively Coupled Plasma Mass Spectrometry (ICP-MS)]

The noble metal content and non-noble metal content of the metal-supported catalyst were measured by ICP-MS. Specifically, first, a non-metal component in the metal-supported catalyst was removed by heating and holding 100 mg of the metal-supported catalyst at 800°C for 3 hours under the atmospheric atmosphere.

Next, a metal contained in the metal-supported catalyst was dissolved by immersing the metal-supported catalyst in 5 mL of hydrochloric acid. Further, distilled water was added to dilute the resultant solution so that the total weight of the solution became 50 mL to provide a metal solution.

A ruthenium content was measured separately by an alkali fusion method. Specifically, first, ruthenium in the metal-supported catalyst was dissolved and a non-metal component therein was removed by heating and holding 20 mg of the metal-supported catalyst and 0.5 g of sodium peroxide at 800°C for 30 minutes under the atmospheric atmosphere. Next, ruthenium contained in the metal-supported catalyst was dissolved in a solution by immersing the metal-supported catalyst in 5 mL of hydrochloric acid. Further, distilled water was added to dilute the resultant solution so that the total weight of the solution became 50 mL to provide a metal solution.

After that, the noble metal concentration and non-noble metal concentration of the resultant metal solution were measured with a sequential-type plasma emission spectrometer (ICPS-8100, manufactured by Shimadzu Corporation). Then, the noble metal content (mg) and non-noble metal content (mg) of the metal-supported catalyst were obtained by multiplying the noble metal concentration (mg/mL) and non-noble metal concentration (mg/mL) of the metal solution by the volume (50 mL) of the metal solution. Further, the noble metal content (mg) and non-noble metal content (mg) of the metal-supported catalyst were divided by 100 mg, which was the weight of the metal-supported catalyst, and the resultant values were multiplied by 100 to provide an ICP noble metal content (wt%) and an ICP non-noble metal content (wt%).

### [X-ray Photoelectron Spectroscopy (XPS)]

Photoelectron spectra of noble metal atoms (ruthenium atoms, palladium atoms, and platinum atoms), non-noble metal atoms (iron atoms, zinc atoms, cobalt atoms, nickel atoms, and copper atoms), and non-metal atoms (carbon atoms, nitrogen atoms, and oxygen atoms) on the surface of the metal-supported catalyst were measured from their core levels with an X-ray photoelectron spectrometer (AXIS NOVA, manufactured by KRATOS). An AlKα ray (10 mA, 15 kV, pass energy: 40 eV) was used as an X-ray source. In the resultant photoelectron spectra, binding energy was corrected so that the peak top of a C1s peak derived from a 1s orbital of carbon atoms was positioned at 284.5 eV.

In XPS wide scan analysis, the atomic concentrations (atom%) of carbon atoms, nitrogen atoms, and oxygen atoms on the surface of the metal-supported catalyst were determined from peak areas and detection sensitivity coefficients in the photoelectron spectra. In addition, a N/C ratio obtained by XPS was calculated by dividing the nitrogen atom concentration (atom%) by the carbon atom concentration (atom%). In addition, an O/C ratio obtained by XPS was calculated by dividing the oxygen atom concentration (atom%) by the carbon atom concentration (atom%).

In addition, the noble metal content (wt%) and non-noble metal content (wt%) of the metal-supported catalyst obtained by XPS were determined from the peak areas, detection sensitivity coefficients, and atomic masses of the noble metal and the non-noble metal. Herein, calculation was performed on the assumption that the metal-supported catalyst did not contain any atoms other than the noble metal atoms and non-noble metal atoms, and carbon atoms, nitrogen atoms, and oxygen atom used for production.

### [Raman Spectroscopy]

The metal-supported catalyst was analyzed by Raman spectroscopy. A Raman spectrum was measured with HORIBA microscopic laser Raman spectrophotometer (LabRAM, HORIBA Jobin Yvon). A laser used for the measurement had an excitation wavelength of 532 nm and an output of 50 mW, and the measurement was performed through a neutral density filter D3 with exposure time of 90 seconds and cumulative number of 2 times to provide a Raman spectrum.

The resultant Raman spectrum was subjected to baseline correction. Specifically, the baseline correction was performed as follows: a straight line connecting a scattering intensity at a Raman shift (cm⁻¹) in the vicinity of 600 cm⁻¹ and a scattering intensity at a Raman shift (cm⁻¹) in the vicinity of 2,000 cm⁻¹ was determined as a baseline; and the baseline was subtracted from the respective intensities in a scattering spectrum.

In the Raman spectrum after the baseline correction, a G band in the vicinity of 1,600 cm⁻¹ (i.e., in the range of 1,500 cm⁻¹ or more and 1,700 cm⁻¹ or less) and a D band in the vicinity of 1,350 cm⁻¹ (i.e., in the range of 1,250 cm⁻¹ or more and 1,450 cm⁻¹ or less) were specified. Then, a Raman-D/G intensity ratio was calculated by dividing a D band peak top intensity by a G band peak top intensity.

### [Results]

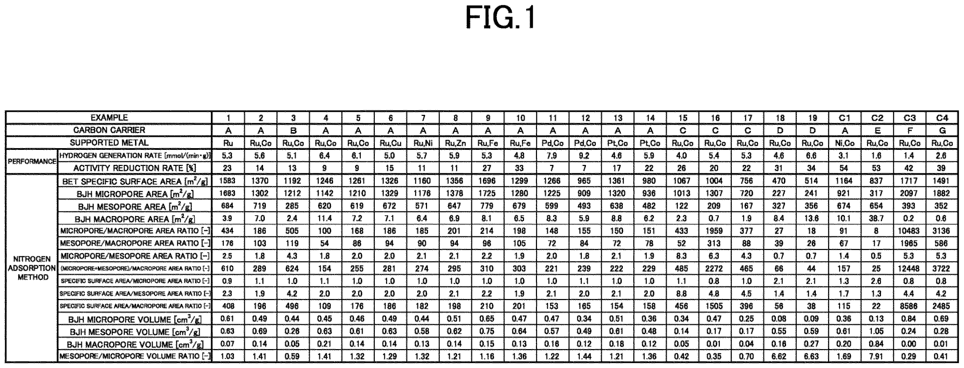

FIG. 1 shows, for each of Example 1 to Example 19 and Example C1 to Example C4, the carbon carrier included in the metal-supported catalyst, the catalyst metal supported on the carbon carrier ("SUPPORTED METAL" in the figure), the performance (hydrogen generation rate (mmol/(min·g)) and activity reduction rate (%) of the metal-supported catalyst, and the BET specific surface area (m²/g), BJH micropore area (m²/g), BJH mesopore area (m²/g), BJH macropore area (m²/g), (micropore+mesopore)/macropore area ratio (-), micropore/macropore area ratio (-), mesopore/macropore area ratio (-), micropore/mesopore area ratio (-), specific surface area/micropore area ratio (-), specific surface area/mesopore area ratio (-), specific surface area/macropore area ratio (-), BJH micropore volume (cm³/g), BJH mesopore volume (cm³/g), BJH macropore volume (cm³/g), and mesopore/micropore volume ratio (-) of the metal-supported catalyst obtained by a nitrogen adsorption method.

As shown in FIG. 1, while the hydrogen generation rate was 3.1 mmol/(min-g) or less in each of Examples C1 to C4, the hydrogen generation rate was 4.0 mmol/(min-g) or more in each of Examples 1 to 19, 5.0 mmol/(min·g) or more in each of Examples 1 to 9, 11, 12, 14, 16, 17, and 19, and 7.9 mmol/(min-g) or more in each of Examples 11 and 12.

While the activity reduction rate of the metal-supported catalyst was 39% or more in each of Examples C1 to C4, the activity reduction rate of the metal-supported catalyst was 34% or less in each of Examples 1 to 19, 27% or less in each of Examples 1 to 9 and 11 to 17, 17% or less in each of Examples 2 to 8 and 11 to 13, and 15% or less in each of Examples 2 to 8, 11, and 12.

The BET specific surface area of the metal-supported catalyst was 470 m²/g or more in each of Examples 1 to 19, 756 m²/g or more in each of Examples 1 to 17, and 965 m²/g or more in each of Examples 1 to 14. In addition, the BET specific surface area of the metal-supported catalyst was 1,696 m²/g or less in each of Examples 1 to 19.

The BJH micropore area of the metal-supported catalyst was 227 m²/g or more in each of Examples 1 to 19, 720 m²/g or more in each of Examples 1 to 17, and 909 m²/g or more in each of Examples 1 to 14. In addition, the BJH micropore area of the metal-supported catalyst was 1,725 m²/g or less in each of Examples 1 to 19.

The BJH mesopore area of the metal-supported catalyst was 122 m²/g or more in each of Examples 1 to 19, and 285 m²/g or more in each of Examples 1 to 14, 18, and 19. In addition, the BJH mesopore area of the metal-supported catalyst was 779 m²/g or less in each of Examples 1 to 19.

The BJH macropore area of the metal-supported catalyst was 0.7 m²/g or more in each of Examples 1 to 19, and 2.4 m²/g or more in each of Examples 1 to 14, 18, and 19. In addition, the BJH macropore area of the metal-supported catalyst was 13.6 m²/g or less in each of Examples 1 to 19.

The micropore/macropore area ratio of the metal-supported catalyst was 18 or more in each of Examples 1 to 19, and 100 or more in each of Examples 1 to 17. In addition, the micropore/macropore area ratio of the metal-supported catalyst was 1,959 or less in each of Examples 1 to 19, and 505 or less in each of Examples 1 to 14.

The mesopore/macropore area ratio of the metal-supported catalyst was 26 or more in each of Examples 1 to 19, 52 or more in each of Examples 1 to 17, and 54 or more in each of Examples 1 to 14. In addition, the mesopore/macropore area ratio of the metal-supported catalyst was 313 or less in each of Examples 1 to 19, and 119 or less in each of Examples 2 to 14.

The micropore/mesopore area ratio of the metal-supported catalyst was 0.7 or more in each of Examples 1 to 19, and 1.8 or more in each of Examples 1 to 17. In addition, the micropore/mesopore area ratio of the metal-supported catalyst was 8.3 or less in each of Examples 1 to 19, and 4.3 or less in each of Examples 1 to 14 and 17 to 19.

The (micropore+mesopore)/macropore area ratio of the metal-supported catalyst was 44 or more in each of Examples 1 to 19, and 154 or more in each of Examples 1 to 17. In addition, the (micropore+mesopore)/macropore area ratio of the metal-supported catalyst was 2,272 or less in each of Examples 1 to 19, and 624 or less in each of Examples 1 to 15 and 17 to 19.

The specific surface area/micropore area ratio of the metal-supported catalyst was 0.8 or more in each of Examples 1 to 19. In addition, the specific surface area/micropore area ratio of the metal-supported catalyst was 2.1 or less in each of Examples 1 to 19, and 1.1 or less in each of Examples 1 to 17.

The specific surface area/mesopore area ratio of the metal-supported catalyst was 1.4 or more in each of Examples 1 to 19, and 1.9 or more in each of Examples 1 to 17. In addition, the specific surface area/mesopore area ratio of the metal-supported catalyst was 8.8 or less in each of Examples 1 to 19, and 4.2 or less in each of Examples 1 to 14, 18, and 19.

The specific surface area/macropore area ratio of the metal-supported catalyst was 38 or more in each of Examples 1 to 19, and 109 or more in each of Examples 1 to 17. In addition, the specific surface area/macropore area ratio of the metal-supported catalyst was 1,505 or less in each of Examples 1 to 19, and 496 or less in each of Examples 1 to 15 and 17 to 19.

The BJH micropore volume of the metal-supported catalyst was 0.08 cm³/g or more in each of Examples 1 to 19, 0.25 cm³/g or more in each of Examples 1 to 17, and 0.34 cm³/g or more in each of Examples 1 to 16. In addition, the BJH micropore volume of the metal-supported catalyst was 0.65 cm³/g or less in each of Examples 1 to 19.

The BJH mesopore volume of the metal-supported catalyst was 0.14 cm³/g or more in each of Examples 1 to 19, and 0.26 cm³/g or more in each of Examples 1 to 14, 18, and 19. In addition, the BJH mesopore volume of the metal-supported catalyst was 0.75 cm³/g or less in each of Examples 1 to 19.

The BJH macropore volume of the metal-supported catalyst was 0.01 cm³/g or more in each of Examples 1 to 19, and 0.05 cm³/g or more in each of Examples 1 to 15, 18, and 19.

The mesopore/micropore volume ratio of the metal-supported catalyst was 0.35 or more in each of Examples 1 to 19. In addition, the mesopore/micropore volume ratio of the metal-supported catalyst was 6.63 or less in each of Examples 1 to 19, and 1.44 or less in each of Examples 1 to 17.

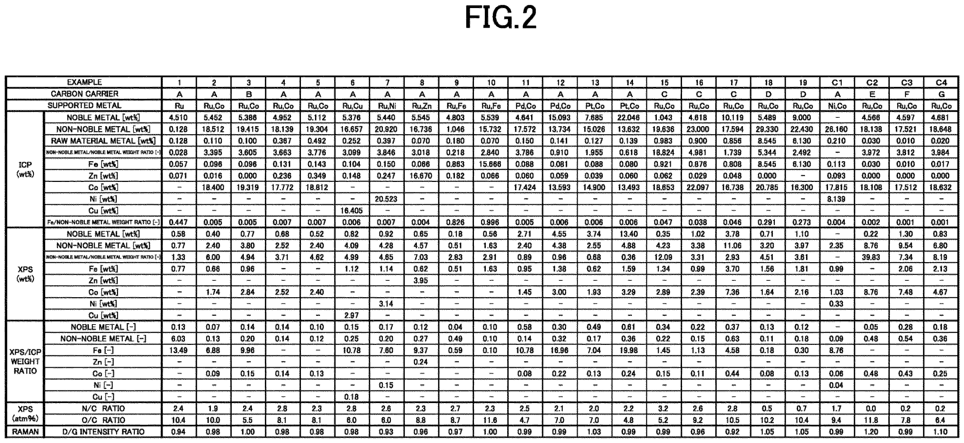

FIG. 2 shows, for each of Example 1 to Example 19 and Example C1 to Example C4, the carbon carrier in the metal-supported catalyst, the catalyst metal supported on the carbon carrier ("SUPPORTED METAL" in the figure), the noble metal content (wt%) ("wt%" in the figure), non-noble metal content (wt%), raw material metal content (wt%), non-noble metal/noble metal weight ratio (-), Fe content (wt%), Zn content (wt%), Co content (wt%), Ni content (wt%), Cu content (wt%), and Fe/non-noble metal weight ratio (-) of the metal-supported catalyst obtained by ICP-MS, the noble metal content (wt%), non-noble metal content (wt%), non-noble metal/noble metal weight ratio (-), Fe content (wt%), Zn content (wt%), Co content (wt%), Ni content (wt%), and Cu content (wt%) of the metal-supported catalyst obtained by XPS, the noble metal-XPS/ICP weight ratio (-), non-noble metal-XPS/ICP weight ratio (-), Fe-XPS/ICP weight ratio (-), Zn-XPS/ICP weight ratio (-), Co-XPS/ICP weight ratio (-), Ni-XPS/ICP weight ratio (-), Cu-XPS/ICP weight ratio (-), XPS-N/C ratio, and XPS-O/C ratio of the metal-supported catalyst, and the Raman-D/G intensity ratio of the metal-supported catalyst.

As shown in FIG. 2, the ICP noble metal content of the metal-supported catalyst was 1.043 wt% or more in each of Examples 1 to 19. In addition, the ICP noble metal content of the metal-supported catalyst was 22.046 wt% or less in each of Examples 1 to 19.

The ICP non-noble metal content of the metal-supported catalyst was 0.128 wt% or more in each of Examples 1 to 19. In addition, the ICP non-noble metal content of the metal-supported catalyst was 29.330 wt% or less in each of Examples 1 to 19.

The ICP raw material metal content of the metal-supported catalyst was 0.070 wt% or more in each of Examples 1 to 19. In addition, the ICP raw material metal content of the metal-supported catalyst was 8.545 wt% or less in each of Examples 1 to 19, 0.983 wt% or less in each of Examples 1 to 17, and 0.492 wt% or less in each of Examples 1 to 14.

The ICP-Fe content of the metal-supported catalyst was 15.666 wt% or less in each of Examples 1 to 19, 8.545 wt% or less in each of Examples 1 to 9 and 11 to 19, 0.921 wt% or less in each of Examples 1 to 9 and 11 to 17, and 0.150 wt% or less in each of Examples 1 to 8 and 11 to 14.

The ICP non-noble metal/noble metal weight ratio of the metal-supported catalyst was 0.028 or more in each of Examples 1 to 19, and 0.218 or more in each of Examples 2 to 19. In addition, the ICP non-noble metal/noble metal weight ratio was 18.824 or less in each of Examples 1 to 19.

The ICP-Fe/non-noble metal weight ratio of the metal-supported catalyst was 0.004 or more in each of Examples 1 to 19. In addition, the ICP-Fe/non-noble metal weight ratio of the metal-supported catalyst was 0.996 or less in each of Examples 1 to 19, 0.291 or less in each of Examples 2 to 8 and 11 to 19, 0.047 or less in each of Examples 2 to 8 and 11 to 17, and 0.007 or less in each of Examples 2 to 8 and 11 to 14.

The XPS noble metal content of the metal-supported catalyst was 0.18 wt% or more in each of Examples 1 to 19. In addition, the XPS noble metal content of the metal-supported catalyst was 13.40 wt% or less in each of Examples 1 to 19, 1.10 wt% or less in each of Examples 1 to 10, 15, 16, 18, and 19, and 0.77 wt% or less in each of Examples 1 to 10, 15, and 18.

The XPS non-noble metal content of the metal-supported catalyst was 0.51 wt% or more in each of Examples 1 to 19. In addition, the XPS non-noble metal content of the metal-supported catalyst was 11.06 wt% or less in each of Examples 1 to 19, and 4.88 wt% or less in each of Examples 1 to 16, 18, and 19.

The XPS non-noble metal/noble metal weight ratio of the metal-supported catalyst was 0.36 or more in each of Examples 1 to 19. In addition, the XPS non-noble metal/noble metal weight ratio of the metal-supported catalyst was 12.09 or less in each of Examples 1 to 19.

The noble metal-XPS/ICP weight ratio of the metal-supported catalyst was 0.04 or more in each of Examples 1 to 19. In addition, the noble metal-XPS/ICP weight ratio of the metal-supported catalyst was 0.61 or less in each of Examples 1 to 19, and 0.17 or less in each of Examples 1 to 10, 18, and 19.

The non-noble metal-XPS/ICP weight ratio of the metal-supported catalyst was 0.10 or more in each of Examples 1 to 19. In addition, the non-noble metal-XPS/ICP weight ratio of the metal-supported catalyst was 6.03 or less in each of Example 1 to Example 19, 0.63 or less in each of Examples 2 to 19, and 0.36 or less in each of Examples 2 to 8, 10 to 16, 18, and 19.

The XPS-N/C ratio of the metal-supported catalyst was 0.5 or more in each of Examples 1 to 19, and 1.9 or more in each of Examples 1 to 17. In addition, the XPS-N/C ratio of the metal-supported catalyst was 3.2 or less in each of Examples 1 to 19.

The XPS-O/C ratio of the metal-supported catalyst was 4.7 or more in each of Examples 1 to 19. In addition, the XPS-O/C ratio of the metal-supported catalyst was 11.6 or less in each of Examples 1 to 19.

The Raman-D/G intensity ratio of the metal-supported catalyst was 0.92 or more in each of Examples 1 to 19. In addition, the Raman-D/G intensity ratio of the metal-supported catalyst was 1.05 or less in each of Examples 1 to 19, and 1.03 or less in each of Examples 1 to 17.

### [Other Hydrogen Production Example]

While hydrogen had been produced by using ethanol as a hydrogen-generating raw material at a heating temperature of 500°C in each of Examples described above, hydrogen was produced by using another hydrogen-generating raw material and/or at another heating temperature.

Specifically, for example, it was recognized that hydrogen was also produced by bringing ethanol and the metal-supported catalyst of Example 2 into contact with each other at a heating temperature of 300°C, 400°C, or 600°C. In addition, it was recognized that hydrogen was also produced by bringing methanol and the metal-supported catalyst of Example 2 into contact with each other at a heating temperature of 300°C, 400°C, 500°C, or 600°C. Further, it was recognized that hydrogen was also produced by bringing ammonia and the metal-supported catalyst of Example 2 into contact with each other at a heating temperature of 400°C, 500°C, or 600°C. In each case, it was recognized that as the heating temperature became higher, the hydrogen generation rate (mmol/(min·g)) evaluated as described above tended to be increased more.

## Claims

1. A catalyst for hydrogen production, comprising:
a carbon carrier; and
catalyst metal particles supported on the carbon carrier,
wherein the catalyst metal particles contain a noble metal,
wherein the catalyst for hydrogen production has a ratio of a BJH mesopore volume to a BJH micropore volume of 0.30 or more and 7.80 or less obtained by a nitrogen adsorption method, and
wherein the catalyst for hydrogen production has a ratio of a total of a BJH micropore area and a BJH mesopore area to a BJH macropore area of 30 or more and 3,500 or less obtained by the nitrogen adsorption method.

2. The catalyst for hydrogen production according to claim 1, wherein the catalyst for hydrogen production has a ratio of the BJH micropore area to the BJH macropore area of 10 or more obtained by the nitrogen adsorption method.

3. The catalyst for hydrogen production according to claim 1 or 2, wherein the catalyst for hydrogen production has a ratio of the BJH mesopore area to the BJH macropore area of 10 or more obtained by the nitrogen adsorption method.

4. The catalyst for hydrogen production according to any one of claims 1 to 3, wherein the catalyst for hydrogen production has a ratio of the BJH micropore area to the BJH mesopore area of 0.1 or more obtained by the nitrogen adsorption method.

5. The catalyst for hydrogen production according to any one of claims 1 to 4, wherein the catalyst for hydrogen production has a ratio of the BJH micropore area to the BJH mesopore area of 15.0 or less obtained by the nitrogen adsorption method.

6. The catalyst for hydrogen production according to any one of claims 1 to 5, wherein the catalyst for hydrogen production has a ratio of a BET specific surface area to the BJH micropore area of 2.5 or less obtained by the nitrogen adsorption method.

7. The catalyst for hydrogen production according to any one of claims 1 to 6, wherein the catalyst for hydrogen production has a ratio of a BET specific surface area to the BJH mesopore area of 1.0 or more obtained by the nitrogen adsorption method.

8. The catalyst for hydrogen production according to any one of claims 1 to 7, wherein the catalyst for hydrogen production has a ratio of a BET specific surface area to the BJH mesopore area of 10.0 or less obtained by the nitrogen adsorption method.

9. The catalyst for hydrogen production according to any one of claims 1 to 8, wherein the catalyst for hydrogen production has a ratio of a BET specific surface area to the BJH macropore area of 20 or more obtained by the nitrogen adsorption method.

10. The catalyst for hydrogen production according to any one of claims 1 to 9, wherein the catalyst for hydrogen production has a ratio of a nitrogen content (atom%) to a carbon content (atom%) of 0.1 or more obtained by X-ray photoelectron spectroscopy.

11. The catalyst for hydrogen production according to any one of claims 1 to 10, wherein the catalyst for hydrogen production has a ratio of an intensity of a D band having a peak top in a vicinity of 1,350 cm⁻¹ to an intensity of a G band having a peak top in a vicinity of 1,600 cm⁻¹ of 1.15 or less in a Raman spectrum obtained by Raman spectroscopy.

12. The catalyst for hydrogen production according to any one of claims 1 to 11, wherein the catalyst for hydrogen production has a weight ratio of a content of the noble metal obtained by X-ray photoelectron spectroscopy to a content of the noble metal obtained by inductively coupled plasma mass spectrometry of 0.70 or less.

13. The catalyst for hydrogen production according to any one of claims 1 to 12, wherein the catalyst metal particles further contain a non-noble metal.

14. A method of producing hydrogen, comprising producing hydrogen using the catalyst of any one of claims 1 to 13.
